# EUROPÄISCHE PATENTSCHRIFT

(11) **EP 4 308 890 B1**
(45) Veröffentlichungstag und Bekanntmachung des Hinweises auf die Patenterteilung: **06.05.2026**
(21) Anmeldenummer: 22715574.4
(22) Anmeldetag: 15.03.2022
(51) Int. Cl.: G01G 17/04, B65B 3/28

(54) **BEHÄLTERFIXIEREINRICHTUNG FÜR PHARMAZEUTISCHE BEHÄLTER, WIEGESTATION UND VORRICHTUNG ZUM VERARBEITEN PHARMAZEUTISCHER BEHÄLTER**
CONTAINER FIXING DEVICE FOR PHARMACEUTICAL CONTAINERS, WEIGHING STATION AND DEVICE FOR TREATING PHARMACEUTICAL CONTAINERS
DISPOSITIF DE FIXATION DE RECIPIENTS POUR RECIPIENTS PHARMACEUTIQUES, STATION DE PESAGE ET DISPOSITIF POUR TRAITER DES RECIPIENTS PHARMACEUTIQUES

(30) Priorität: 17.03.2021 DE 102021106457
(43) Veröffentlichungstag der Anmeldung: 24.01.2024
(73) Patentinhaber: Bausch + Ströbel SE + Co. KG, 74532 Ilshofen (DE)
(72) Erfinder: PROZER, Daniel, 74589 Gröningen (DE); SLANSKY, Maren, 74523 Schwäbisch Hall (DE)
(74) Vertreter: DTS Patent- und Rechtsanwälte PartmbB
(86) Internationale Anmeldenummer: PCT/EP2022/056706
(87) Internationale Veröffentlichungsnummer: WO 2022/194869

(56) Entgegenhaltungen:
- DE-U1- 29 923 418
- US-A1- 2017 258 294

## Beschreibung

Die vorliegende Erfindung betrifft eine Behälterfixiereinrichtung für pharmazeutische Behälter zur Verwendung an einer Wiegestation.

Ferner betrifft die vorliegende Erfindung eine Wiegestation für eine Vorrichtung zum Verarbeiten von pharmazeutischen Behältern.

Darüber hinaus betrifft die vorliegende Erfindung eine Vorrichtung zum Verarbeiten pharmazeutischer Behälter.

In einer derartigen Vorrichtung werden pharmazeutische Behälter, insbesondere Spritzen, Karpulen, Ampullen und/oder Vials, üblicherweise mit einer Transporteinrichtung zu verschiedenen Verarbeitungsstationen transportiert. Beispielsweise sind die Verarbeitungsstationen längs einer Transportrichtung an der Transporteinrichtung angeordnet. Die Behälter, die auch als Objekte bezeichnet werden können, werden dabei beispielsweise an einer Befüllstation mit einer pharmazeutischen Substanz (Agens) befüllt. Die Substanz kann beispielsweise eine Flüssigkeit oder ein Feststoff sein. Im Hinblick auf eine Prozesskontrolle kann vorgesehen sein, die Behälter zur Bestimmung des Taragewichtes vor dem Befüllen zu wiegen und anschließend zum Bestimmen des Bruttogewichtes nach dem Befüllen erneut zu wiegen. Etwaige Fehlmengen können nachgefüllt werden. Überfüllte Behälter können ausgeschleust werden. An einer Schließstation können die Behälter verschlossen werden.

Bei den Behältern kann zwischen standfesten Behältern und nicht-standfesten Behältern unterschieden werden. Standfeste Behälter sind beispielsweise Vials oder Fläschchen, die für den Wiegevorgang auf tellerartigen Aufnahmen der Wiegestation standfest abgestellt werden können. Demgegenüber sind Behälter wie Spritzen, Karpulen oder Ampullen für sich nicht oder kaum standfest. Daher ist es erforderlich, derartige Behälter zum Beispiel in eine Hülse einzuführen, die die Behälter während des Wiegevorgangs aufnimmt. Hierbei ist es ungünstig, dass verhältnismäßig große Bewegungen zum Absenken der Behälter oder zum Anheben der Wiegestation durchgeführt werden müssen. Dadurch verlängert sich die Taktzeit für den Wiegevorgang, so dass die Vorrichtung trotz möglicher kürzerer Taktzeiten der Transporteinrichtung nicht mit dem vollen Takt gefahren werden kann. Eine beschleunigte Bewegung der Behälter oder der Waage führt zu keiner Verkürzung der Taktzeit, weil sich der Einschwingvorgang der Wiegestation und damit der Wiegevorgang verlängert. Eine Behälterfixiereinrichtung mit hülsenförmiger Aufnahme ist in der WO 2020/075204 A1 beschrieben.

In der DE 299 23 418 U1 ist eine Vorrichtung gezeigt, bei der die Behälter zum Wiegen mittels eines Roboters aus einer Transporteinrichtung herausgehoben und zu einer externen Wiegeeinrichtung transportiert werden. Dort werden die Behälter unfixiert in einem Wiegebecher der Wiegeeinrichtung abgestellt und gewogen. Nach dem Wiegevorgang werden die Behälter vom Roboter aus dem Wiegebecher entnommen und zur Transporteinrichtung bewegt, um dort wieder eingesetzt zu werden.

Aufgabe der vorliegenden Erfindung ist es, eine Behälterfixiereinrichtung, eine Wiegestation und eine Vorrichtung zum Verarbeiten pharmazeutischer Behälter bereitzustellen, die eine Fixierung insbesondere nicht-standfester Behälter an einer Wiegezelle der Wiegestation ermöglicht, vorzugsweise zur Verringerung einer Taktzeit der Wiegestation.

Diese Aufgabe wird durch eine erfindungsgemäße Behälterfixiereinrichtung für pharmazeutische Behälter zur Verwendung an einer Wiegestation gelöst, umfassend einen Grundkörper in Verbindung mit einer oder als Bestandteil einer Wiegezelle der Wiegestation, zwei oder mehr am Grundkörper festgelegte Fixierelemente, mit mindestens einem jeweiligen an den Behälter anlegbaren Fixierglied, zwischen denen ein Zwischenraum zum Aufnehmen eines Behälters gebildet ist und von denen mindestens ein Fixierelement am Grundkörper beweglich angeordnet ist, wobei ein im Zwischenraum angeordneter Behälter bei einer Relativbewegung zum Grundkörper in einer Betätigungsrichtung ein Betätigungsglied des mindestens einen beweglichen Fixierelementes kontaktiert und dieses von einer Freigabestellung, in der der Behälter in den Zwischenraum einführbar und aus diesem entfernbar ist, in eine Fixierstellung überführbar ist, in der der Behälter mittels der Fixierglieder fixiert ist, wobei die Behälterfixiereinrichtung so ausgebildet ist, dass der Behälter in einer Transportrichtung in den Zwischenraum einführbar ist, die quer und insbesondere senkrecht zur Betätigungsrichtung ausgerichtet ist.

Die erfindungsgemäße Behälterfixiereinrichtung kann über den Grundkörper an der Wiegezelle (auch als Wägezelle bezeichnet) der Wiegestation festgelegt sein. Alternativ kann die Wiegezelle den Grundkörper ausbilden. Zwischen zwei oder mehr Fixierelementen der Behälterfixiereinrichtung ist ein Zwischenraum gebildet. Mindestens ein Fixierelement kann von einer Freigabestellung in eine Fixierstellung überführt werden, in der der Behälter von den Fixierelementen mittels der Fixierglieder fixiert ist. Die Bewegung des beweglichen Fixierelementes erfolgt durch eine Relativbewegung des Behälters und des Grundkörpers. Dabei kann der Behälter ein Betätigungsglied des mindestens einen beweglichen Fixierelementes kontaktieren, um dieses in die Fixierstellung zu überführen. Der Behälter kann in der Transportrichtung, die beispielsweise durch eine Transporteinrichtung vorgegeben ist, quer und insbesondere senkrecht zur Betätigungsrichtung in den Zwischenraum eingeführt werden. Dadurch besteht vorzugsweise die Möglichkeit, die Relativbewegung des Behälters und des Grundkörpers für den Fixiervorgang möglichst kurz zu gestalten. Insbesondere ist es im Vergleich zu beispielsweise hülsenförmigen Behälterfixiereinrichtungen des Standes der Technik nicht erforderlich, den Behälter über die gesamte Länge der Hülse zu bewegen. Durch den so verminderten Bewegungsumfang zum Betätigen der Behälterfixiereinrichtung kann eine übermäßige Beschleunigung des Behälters verringert werden, verbunden mit kurzem Einschwingvorgang der Wiegestation und im Ergebnis erhöhtem Takt der Wiegestation.

Nachfolgende Ausführungen beziehen sich auf einen bestimmungsgemäßen Gebrauch der Behälterfixiereinrichtung, der Wiegestation und der Vorrichtung zum Verarbeiten der Behälter. Hierbei wird der Wiegevorgang mittels Schwerkraft durchgeführt, wobei die Wiegezelle bezogen auf die Schwerkraftrichtung unterhalb des Behälters angeordnet ist. Positions- und Orientierungsangaben wie beispielsweise "unterhalb", "oberhalb" oder dergleichen beziehen sich auf den bestimmungsgemäßen Gebrauch. Die Betätigungsrichtung ist vorzugsweise längs einer Höhenrichtung und insbesondere einer Vertikalen ausgerichtet, die Transportrichtung vorzugsweise längs einer Horizontalen.

"Behälter" kann im vorliegenden Fall insbesondere nicht nur das eigentliche, die pharmazeutische Substanz aufnehmende Gefäß umfassen, sondern auch etwaige daran angeordnete Bestandteile im Zusammenhang mit der üblichen Darreichung des Behälters. Beispielsweise kann der Behälter bei Spritzen auch den üblicherweise über der Spritzennadel angebrachten Nadelschutz umfassen, der zum Beispiel kappenförmig ausgebildet ist. Bei Karpulen kann der Behälter beispielsweise auch die an einer Seite angeordnete Bördelkappe umfassen.

Vorgesehen sein kann, dass die Wiegezelle, insbesondere die Wiegestation, angehoben werden kann. Beispielsweise ist die Behälterfixiereinrichtung in Richtung auf den im Zwischenraum angeordneten Behälter anhebbar, wobei das Betätigungsglied ein unteres Ende oder einen unteren Endabschnitt des Behälters kontaktiert. Die Orientierung der Betätigungsrichtung weist in diesem Fall insbesondere vertikal nach oben.

Alternativ kann vorgesehen sein, dass der Behälter abgesenkt werden kann. Beispielsweise ist der im Zwischenraum angeordnete Behälter in Richtung auf das Betätigungsglied absenkbar, wobei ein unteres Ende oder ein unterer Endabschnitt des Behälters das Betätigungsglied des mindestens einen beweglichen Fixierelementes kontaktiert. Die Orientierung der Betätigungsrichtung ist insbesondere vertikal nach unten.

Vorgesehen sein kann zur Erzielung einer konstruktiv einfachen Ausführungsform, dass die Behälterfixiereinrichtung genau zwei Fixierelemente umfasst. Die Fixierelemente liegen einander vorzugsweise in Bezug auf den Zwischenraum direkt gegenüber.

Günstig kann es sein, wenn die Behälterfixiereinrichtung nur ein bewegliches Fixierelement umfasst. Dies erweist sich zum Beispiel vorteilhaft für eine konstruktiv einfache Ausführungsform.

Alternativ oder ergänzend kann vorgesehen sein, dass die Behälterfixiereinrichtung mindestens ein unbewegliches Fixierelement umfasst. Dies kann sich als vorteilhaft für eine konstruktiv einfache Ausgestaltung erweisen.

Die Behälterfixiereinrichtung umfasst bei einer bevorzugten Ausführungsform der Erfindung ein bewegliches und ein unbewegliches Fixierelement und vorzugsweise kein weiteres Fixierelement.

Bei einer andersartigen bevorzugten Ausführungsform der Erfindung kann die Behälterfixiereinrichtung beispielsweise zwei bewegliche Fixierelemente und vorzugsweise kein weiteres Fixierelement umfassen.

Mindestens zwei Fixierelemente sind vorzugsweise identisch ausgestaltet, im Hinblick auf eine konstruktiv einfache Ausgestaltung.

Vorteilhaft kann es sein, wenn mindestens zwei bewegliche Fixierelemente symmetrisch zueinander in Bezug auf eine die Transportrichtung enthaltende Mittelebene der Behälterfixiereinrichtung ausgestaltet und angeordnet sind.

Günstigerweise ist vorgesehen, dass der Behälter im Zwischenraum von den Fixierelementen zentrierbar ist, indem das mindestens eine bewegliche Fixierelement in die Fixierstellung überführt wird. Auf diese Weise ist die Position des Behälters eindeutig festgelegt. Dies ist zum Beispiel von Vorteil, wenn ein Füllelement der Füllstation zum Befüllen in den Behälter eingreift, während dieser sich an der Wiegestation befindet.

Bei der erfindungsgemäßen Behälterfixiereinrichtung ist der Behälter in der Transportrichtung in den Zwischenraum einführbar, wie oben erwähnt. Vorgesehen sein kann zum Beispiel, dass der Behälter entgegen der Transportrichtung aus dem Zwischenraum herausführbar ist, wenn das mindestens eine bewegliche Fixierelement die Freigabestellung einnimmt.

Günstig ist es allerdings, wenn der Behälter in der Transportrichtung aus dem Zwischenraum herausführbar ist. Dies gibt zum Beispiel die Möglichkeit, die Wiegestation an einer Transporteinrichtung mit einer insbesondere linearen Transportrichtung anzuordnen. Die Behälter werden in der Transportrichtung in den Zwischenraum eingeführt, gewogen - eventuell befüllt und erneut gewogen - und weiter in der Transportrichtung aus dem Zwischenraum herausgeführt.

Günstig kann es dementsprechend sein, wenn der Behälter in der Transportrichtung durch die Behälterfixiereinrichtung hindurchführbar ist. Dies erweist sich beispielsweise als vorteilhaft für eine mehrstellige Wiegestation beim Zuführen und Abführen der Behälter.

Am Grundkörper ist vorzugsweise mindestens eine Durchgangsöffnung gebildet, durch die hindurch der Behälter in der Transportrichtung in den Zwischenraum einführbar ist.

Vorteilhafterweise sind am Grundkörper zwei Durchgangsöffnungen gebildet, durch die hindurch der Behälter in den Zwischenraum hinein- und aus diesem herausführbar ist.

Bei den zuletzt erwähnten vorteilhaften Ausführungsformen ist es günstigerweise nicht erforderlich, den gesamten Behälter durch die mindestens eine Durchgangsöffnung hindurchzuführen. Beispielsweise wird nur ein Abschnitt des Behälters, zum Beispiel ein unterer Abschnitt des Behälters, durch die Durchgangsöffnung hindurchgeführt. Dies kann zum Beispiel dann ausreichend sein, wenn der Behälter und/oder die Fixierelemente in Höhenrichtung über den Grundkörper hinausragt/hinausragen.

Die zwei Durchgangsöffnungen liegen einander vorzugsweise längs der Transportrichtung gegenüber.

Die zwei oder mehr Fixierelemente sind bevorzugt so weit voneinander beabstandet, dass bei Einnahme der Freigabestellung des beweglichen Fixierelementes der Zwischenraum so groß ist, dass der Behälter oder ein Behälterabschnitt in den Zwischenraum einführbar oder aus diesem herausführbar ist. Hierbei ist der Behälter oder der Behälterabschnitt vorzugsweise frei von Kontakt mit den Fixierelementen.

Der Grundkörper umfasst vorzugsweise zwei oder mehr Halteabschnitte, die jeweils im Abstand zueinander angeordnet sind und an denen jeweils ein Fixierelement angeordnet ist. Beispielsweise ist jedem Fixierelement ein Halteabschnitt zugeordnet. Die Halteabschnitte können den Zwischenraum beispielsweise zumindest abschnittsweise begrenzen, und/oder die vorstehend genannte mindestens eine Durchgangsöffnung kann zwischen beabstandeten Halteabschnitten angeordnet sein.

In Draufsicht längs der Transportrichtung ist der Grundkörper beispielsweise im Wesentlichen U-förmig gebildet. Beispielsweise umfasst der Grundkörper ein Basiselement und voneinander beabstandete Halteabschnitte, die jeweils einen Schenkel des U bilden.

Die Halteabschnitte umfassen beispielsweise jeweils zwei insbesondere in der Transportrichtung voneinander beabstandete Haltesegmente, zwischen denen ein Fixierelement angeordnet ist und an denen das Fixierelement beweglich oder unbeweglich festgelegt ist.

Die Fixierelemente können, insbesondere nach oben in einer Höhenrichtung, über die Halteabschnitte hinausragen. Alternativ können die Halteabschnitte zum Beispiel in der Höhenrichtung gleich lang oder im Wesentlichen gleich lang sein wie die Fixierelemente.

Der Grundkörper umfasst bei einer bevorzugten Ausführungsform einen beispielsweise platten- oder tellerförmigen Basisabschnitt, von dem die Halteabschnitte abstehen, und/oder an dem ein Verbindungselement zum Verbinden mit einer Wiegezelle angeordnet ist. Die Halteabschnitte stehen beispielsweise nach oben vom Basisabschnitt ab, insbesondere in vertikaler Richtung.

Die Verbindung des Grundkörpers mit der Wiegezelle erfolgt beispielsweise durch Kraft- und/oder Formschluss. Vorgesehen sein kann zum Beispiel eine Verrastung.

Mindestens ein Fixierelement kann lösbar mit dem Grundkörper verbindbar sein.

Mindestens ein Fixierelement kann unlösbar am Grundkörper festgelegt sein.

Vorgesehen sein kann, dass mindestens ein Fixierelement einstückig mit dem Grundkörper verbunden oder durch den Grundkörper gebildet ist.

Von Vorteil ist es, wenn das mindestens eine bewegliche Fixierelement am Grundkörper um eine Schwenkachse schwenkbar gelagert ist. Auf diese Weise kann eine zuverlässige Funktion der Behälterfixiereinrichtung sichergestellt werden. Vorzugsweise wird hierbei eine kompakte Bauform der Behälterfixiereinrichtung erzielt. Dies erweist sich zum Beispiel als günstig, um, insbesondere bei einer Mehrzahl von Wiegezellen und Behälterfixiereinrichtungen, einen hinreichend geringen Abstand benachbarter Behälter voneinander ("Stich") in der Transporteinrichtung zu ermöglichen.

Die Schwenkachse ist vorzugsweise parallel zur Transportrichtung ausgerichtet. Beispielsweise wird das bewegliche Fixierelement in einer Ebene verschwenkt, die senkrecht zur Transportrichtung ausgerichtet ist.

Das mindestens eine bewegliche Fixierelement ist vorzugsweise an einem distalen Ende des Halteabschnitts angelenkt, wobei sich "distal" auf den vorstehend genannten Basisabschnitt bezieht.

Das mindestens eine bewegliche Fixierelement bildet vorzugsweise einen zweiarmigen Hebel aus, der einen ersten, das Fixierglied umfassenden Hebelarm und einen zweiten, das Betätigungsglied umfassenden Hebelarm umfasst. Die Schwenkachse ist bevorzugt zwischen dem Betätigungsglied und dem Fixierglied angeordnet.

Vorgesehen sein kann, dass der erste Hebelarm länger ausgestaltet ist als der zweite Hebelarm.

Das Betätigungsglied und das Fixierglied sind vorteilhafterweise an einander abgewandten Endabschnitten des Fixierelementes angeordnet.

Günstig ist es, wenn das Betätigungsglied in der Freigabestellung des mindestens einen beweglichen Fixierelementes eine schräg zur Betätigungsrichtung ausgerichtete Auflauffläche umfasst oder ausbildet. Durch die Relativbewegung kann der Behälter die Auflauffläche kontaktieren und die Verschwenkung des Fixierelementes herbeiführen.

Das mindestens eine bewegliche Fixierelement umfasst bei einer bevorzugten Ausführungsform einen zwischen dem Betätigungsglied und dem Fixierglied angeordneten und diese verbindenden zurückgesetzten Abschnitt, im Bereich dessen das Fixierelement bezüglich dem Zwischenraum im Vergleich zum Betätigungsglied und zum Fixierglied zurückgesetzt ist. An dem zurückgesetzten Abschnitt, an dem beispielsweise die Schwenkachse angeordnet ist, ist insbesondere der Zwischenraum verbreitert.

Die Fixierelemente weisen vorzugsweise eine Längserstreckung auf.

Alternativ oder ergänzend sind die Fixierelemente beispielsweise leistenförmig oder fingerförmig ausgestaltet.

In der Fixierstellung liegt der Behälter vorzugsweise am Betätigungsglied in der Fixierstellung des mindestens einen beweglichen Fixierelementes an. Dies sichert insbesondere das Fixierelement in der Fixierstellung.

Durch eine Relativbewegung entgegen der Betätigungsrichtung kann der Behälter vorzugsweise vom Betätigungsglied entfernt werden, um die Rückbewegung des Fixierelementes in die Freigabestellung zu ermöglichen.

Vorteilhaft ist es, wenn der Grundkörper eine Ausnehmung umfasst, in die der Behälter im mittels der Behälterfixiereinrichtung fixierten Zustand eingreift. Dies erlaubt es, eine definierte Position des Behälters in der Behälterfixiereinrichtung sicherzustellen. Vorteilhaft kann dies insbesondere dann sein, wenn der Behälter an der Wiegestation befüllt werden soll.

Der Behälter greift vorzugsweise formschlüssig in die Ausnehmung ein.

Die Ausnehmung ist beispielsweise sacklochförmig.

Von Vorteil ist es, wenn das Fixierglied mindestens eines Fixierelementes eine konkave Ausnehmung umfasst, in die der Behälter in der Fixierstellung des mindestens einen beweglichen Fixierelementes eingreift. Die Ausnehmung ist vorzugsweise an die Form und/oder die Größe des Behälters angepasst. Auf diese Weise kann eine zuverlässige Fixierung des Behälters sichergestellt werden, den das Fixierglied zum Beispiel seitlich umgreift.

Günstig ist es, wenn das Fixierglied mindestens eines Fixierelementes mittels eines Vorspannelementes in Richtung auf den im Zwischenraum angeordneten Behälter vorgespannt ist. Der Behälter kann über das Vorspannelement mit einer Fixierkraft beaufschlagt werden und ist auf diese Weise zuverlässig fixiert.

Das Vorspannelement ist zum Beispiel eine Druckfeder, die an einem Stützglied des Fixierelementes und am Fixierglied anliegt, um das Fixierglied mit einer auf den Behälter gerichteten Kraft zu beaufschlagen. Beispielsweise ist das Vorspannelement eine Schraubenfeder.

Am Fixierelement ist beispielsweise eine Aufnahme für das Fixierglied gebildet, oder das Fixierelement umfasst eine derartige Aufnahme. Günstigerweise sind das Fixierglied und das Vorspannelement in der Aufnahme angeordnet, die eine Führung für das Fixierglied bildet, wobei das Fixierglied eine Öffnung der Aufnahme durchgreift und in Richtung des Behälters ragt. Beispielsweise kann das Fixierglied unter der Wirkung oder entgegen der Wirkung des Vorspannelementes verschoben werden und dabei unterschiedlich weit aus der Aufnahme herausragen.

Vorteilhaft kann es sein, wenn das Fixierelement einen Aufnahmekörper aufweist, der die Aufnahme umfasst oder bildet, und der an einem Halteabschnitt des Grundkörpers verschieblich geführt und mit einem am Halteabschnitt schwenkbar gelagerten Schwenkabschnitt des Fixierelementes gekoppelt ist und beim Verschwenken des Schwenkabschnittes von diesem relativ zum Grundkörper verschoben wird. Beim Verschwenken des beweglichen Fixierelementes wird der Aufnahmekörper zusammen mit dem daran angeordneten Fixierglied verschoben. Es zeigt sich, dass auf diese Weise insbesondere eine zuverlässige Fixierung des Behälters erzielt werden kann. Die Kopplung des Schwenkabschnittes an den Aufnahmekörper erfolgt beispielsweise mittels eines Gelenks, das zum Beispiel ein in ein Langloch eingreifendes Lagerelement umfasst. Die Schwenkbewegung des Fixierelementes kann auf diese Weise in eine insbesondere geradlinige Verschiebung des Aufnahmekörpers am Halteabschnitt umgesetzt werden.

Eine Verschieberichtung des Aufnahmekörpers ist insbesondere senkrecht zur Betätigungsrichtung und/oder senkrecht zur Transportrichtung ausgerichtet.

Von Vorteil ist es, wenn das mindestens eine bewegliche Fixierelement bei einer Relativbewegung des Behälters und des Grundkörpers entgegen der Betätigungsrichtung selbsttätig von der Fixierstellung in die Freigabestellung überführt wird. Zum Freigeben des Behälters wird die oben genannte Relativbewegung umgekehrt. Hierdurch entfällt vorzugsweise der Kontakt des Behälters mit dem Betätigungselement, das selbsttätig von der Fixierstellung in die Freigabestellung überführt wird. Dies erfolgt insbesondere unter Schwerkrafteinfluss.

Vorgesehen sein kann, dass ein vorzugsweise unbewegliches Fixierelement ein Fixierglied mit zwei Fixierabschnitten umfasst, die in einer Erstreckungsrichtung des Behälters voneinander beabstandet sind, wobei ein vorzugsweise bewegliches Fixierelement ein Fixierelement umfasst, das bezogen auf die Erstreckungsrichtung zwischen den Fixierabschnitten angeordnet ist.

Ein unbewegliches Fixierelement ist beispielsweise parallel zur Betätigungsrichtung und/oder in einer Höhenrichtung ausgerichtet.

Die Behälterfixiereinrichtung umfasst bei einer bevorzugten Ausführungsform der Erfindung an zwei oder mehr Fixierelementen jeweils zusammenwirkende Kopplungselemente, um die Fixierelemente in der Freigabestellung miteinander insbesondere kontaktlos zu koppeln, wobei die Fixierelemente entgegen der Wirkung der Kopplungselemente von der Freigabestellung in die Fixierstellung überführt werden. Die Kopplungselemente sind beispielsweise ausgebildet, eine Kopplungskraft zwischen den Fixierelementen bereitzustellen. Ein bewegliches Fixierelement kann auf diese Weise in der Freigabestellung gesichert werden, und erst unter Betätigung durch den Behälter wird das Fixierelement in die Fixierstellung überführt.

Die Kopplungselemente sind oder umfassen vorzugsweise Magnetelemente an den Fixierelementen, entgegen deren Magnetkraft das mindestens eine bewegliche Fixierelement von der Freigabestellung in die Fixierstellung überführt wird.

Beispielsweise sind die Magnetelemente in einer jeweiligen Aufnahme des Fixierelementes angeordnet, die durch ein Abdeckelement geschlossen sein kann.

Die Magnetelemente können in das Fixierelement verpresst, eingespritzt oder eingegossen sein.

Die Kopplungselemente, insbesondere die Magnetelemente, sind vorzugsweise im Bereich eines dem Basisabschnitt des Grundkörpers zugewandten Endabschnittes der Fixierelemente angeordnet, zum Beispiel auf Höhe des Betätigungsgliedes.

Die Behälterfixiereinrichtung umfasst am Grundkörper ein vorzugsweise getrennt von einem Fixierelement gebildetes Anschlagelement, an dem das mindestens eine bewegliche Fixierelement in der Freigabestellung anschlägt. Auf diese Weise ist die Freigabestellung des beweglichen Fixierelementes klar definiert.

Die Behälterfixiereinrichtung ist vorteilhafterweise so ausgestaltet, dass die bewegte Masse des mindestens einen beweglichen Fixierelementes möglichst gering ist.

Die Behälterfixiereinrichtung ist vorzugsweise pharmagerecht ausgestaltet, beispielsweise für einen Einsatz in einer Atmosphäre zum Schutz und/oder für Dekontaminationszwecke einer Isolatoreinrichtung der Vorrichtung zum Verarbeiten von Behältern.

Wie eingangs erwähnt, betrifft die vorliegende Erfindung auch eine Wiegestation.

Eine erfindungsgemäße Wiegestation für eine Vorrichtung zum Verarbeiten von pharmazeutischen Behältern umfasst mindestens eine Wiegezelle und mindestens eine dieser zugeordnete Behälterfixiereinrichtung der vorstehend beschriebenen Art, wobei vorzugsweise eine Mehrzahl von Wiegezellen und eine Mehrzahl von Behälterfixiereinrichtungen der vorstehend beschriebenen Art vorgesehen ist, wobei jeder Wiegezelle eine Behälterfixiereinrichtung zugeordnet ist.

Die Wiegezellen und die Behälterfixiereinrichtungen sind vorzugsweise längs der Transportrichtung seitlich nebeneinander angeordnet und gleichmäßig voneinander beabstandet.

Wie eingangs ferner erwähnt, betrifft die vorliegende Erfindung auch eine Vorrichtung.

Eine erfindungsgemäße Vorrichtung zum Verarbeiten pharmazeutischer Behälter umfasst eine Transporteinrichtung, wobei die Behälter an der Transporteinrichtung mit jeweils mindestens einem Greifelement gehalten und in einer definierten Transportrichtung getaktet transportierbar sind, und mindestens eine an der Transporteinrichtung angeordnete Wiegestation der vorstehend beschriebenen Art, wobei ein jeweiliger Behälter in der Transportrichtung in den Zwischenraum einer Behälterfixiereinrichtung bewegbar ist und die Wiegestation und der Behälter relativ zueinander in der Betätigungsrichtung zum Überführen des mindestens einen beweglichen Fixierelementes von der Freigabestellung in die Fixierstellung überführbar sind.

Die Vorteile, die bereits im Zusammenhang mit der Erläuterung der erfindungsgemäßen Behälterfixiereinrichtung erwähnt wurden, können bei der erfindungsgemäßen Wiegestation und bei der erfindungsgemäßen Vorrichtung ebenfalls erzielt werden. Diesbezüglich kann auf voranstehenden Ausführungen verwiesen werden. Vorteilhafte Ausführungsformen der erfindungsgemäßen Wiegestation und der erfindungsgemäßen Vorrichtung ergeben sich durch vorteilhafte Ausführungsformen der erfindungsgemäßen Behälterfixiereinrichtung. Auch diesbezüglich kann auf die voranstehenden Ausführungen verwiesen werden.

Bei der Vorrichtung können die Behälter in der Transportrichtung in den Zwischenraum eingeführt und im fixierten Zustand gewogen werden. Vorzugsweise ist eine Befüllstation zum Befüllen der Behälter an der Wiegestation vorgesehen. Vorzugsweise erfolgt eine Tarawiegung und eine Bruttowiegung im Hinblick auf eine 100%-Prozesskontrolle (IPC).

Es versteht sich, dass die erfindungsgemäße Vorrichtung vorzugsweise eine Steuereinrichtung umfassen kann, die sämtliche Vorgänge steuern kann. "Steuern" kann im vorliegenden Fall insbesondere "Steuern und/oder Regeln" bedeuten.

Günstigerweise werden die Behälter in der Transportrichtung in den Zwischenraum eingeführt und nach dem Wiegevorgang wieder in der Transportrichtung aus diesem herausgeführt. Dies gibt die Möglichkeit eines Durchtransportes durch die Behälterfixiereinrichtung mit mindestens einem zwischenzeitlichen Wiegevorgang und vorzugsweise einem Befüllvorgang.

Das mindestens eine den Behälter greifende Greifelement ist vorzugsweise in eine den Behälter freigebende Öffnungsstellung überführbar, wenn der Behälter an der Behälterfixiereinrichtung fixiert ist. Erst dann, wenn der Behälter zuverlässig fixiert ist, wird das Greifelement im Hinblick auf eine erhöhte Prozesssicherheit freigegeben.

Die Wiegestation umfasst, entlang der Transportrichtung, vorzugsweise eine Mehrzahl von Wiegezellen und eine Mehrzahl von Behälterfixiereinrichtungen, wobei eine vorzugsweise korrespondierende Mehrzahl von Behältern den Behälterfixiereinrichtungen getaktet zugeführt und an der Wiegestation gleichzeitig gewogen wird. Die Wiegestation kann dementsprechend mehrstellig ausgebildet sein, wobei die Stellenanzahl der Wiegezellen und Behälterfixiereinrichtungen der Stellenanzahl der zu verarbeitenden Behälter entsprechen kann.

Die Behälterfixiereinrichtung der Wiegestation kann insbesondere ein sogenanntes "Formatteil" sein, das an die Beschaffenheit des zu verarbeitenden Behälters angepasst ist. Auf diese Weise kann eine Umrüstung der Wiegestation vorgenommen werden, wenn unterschiedliche Behälter verarbeitet werden sollen.

Bei der Vorrichtung zum Verarbeiten pharmazeutischer Behälter kann vorgesehen sein, dass eine Wiegestation zum Einsatz kommt, mit der das Taragewicht und das Bruttogewicht der Behälter ermittelt wird. Bei einer derartigen Vorrichtung ist beispielsweise nur eine Wiegestation vorgesehen. Die Behälter werden vorzugsweise mittels der Befüllstation befüllt, während sie sich an der Wiegestation befinden. Vorgesehen sein kann, dass das Bruttogewicht während des Befüllvorgangs ermittelt wird.

Vorgesehen sein kann, dass die Vorrichtung eine erste Wiegestation zum Ermitteln des Taragewichtes und eine zweite Wiegestation zum Ermitteln des Bruttogewichtes der Behälter umfasst. Die Wiegestationen sind beispielsweise hintereinander entlang der Transportrichtung angeordnet. Die Befüllstation ist beispielsweise ausgebildet, die Behälter zwischen den Wiegestationen zu befüllen. Vorteilhafterweise ist vorgesehen, dass die Behälter während des Transports von der ersten Wiegestation zur zweiten Wiegestation befüllt werden. Etwaige fehlende Füllmengen können beispielsweise nachgefüllt werden, während die Behälter an der zweiten Station mittels der Behälterfixiereinrichtung gehalten sind.

Die nachfolgende Beschreibung bevorzugter Ausführungsformen der Erfindung dient im Zusammenhang mit der Zeichnung der näheren Erläuterung der Erfindung. Es zeigen:
- Figur 1:: eine schematische Draufsicht auf eine erfindungsgemäße Vorrichtung zum Verarbeiten pharmazeutischer Behälter, umfassend eine erfindungsgemäße Wiegestation mit erfindungsgemäßen Behälterfixiereinrichtungen;
- Figur 2:: eine perspektivische Teildarstellung der Vorrichtung aus Figur 1, in der die Wiegestation mit Behälterfixiereinrichtungen an einer Transporteinrichtung teilweise dargestellt ist;
- Figur 3:: eine Teilansicht längs des Pfeiles "3" in Figur 2, wobei ein Fixierelement der Behälterfixiereinrichtung eine Freigabestellung einnimmt;
- Figur 4:: eine Darstellung entsprechend Figur 3, wobei das Fixierelement eine Fixierstellung einnimmt;
- Figuren 5 und 6:: Darstellungen entsprechend den Figuren 3 und 4 in Längsschnittansichten der Behälterfixiereinrichtung und unter Ausblendung der Transporteinrichtung;
- Figur 7:: eine vereinfachte Schnittdarstellung längs der Linie 7-7 in Figur 3;
- Figur 8:: eine vereinfachte Teildarstellung längs der Linie 8-8 in Figur 4;
- Figuren 9 und 10:: Darstellungen entsprechend den Figuren 5 und 6 bei einer weiteren bevorzugten Ausführungsform der Behälterfixiereinrichtung;
- Figur 11:: eine Darstellung entsprechend Figur 3 bei einer weiteren bevorzugten Ausführungsform der Behälterfixiereinrichtung unter Ausblendung der Transporteinrichtung;
- Figur 12:: eine Seitenansicht der Behälterfixiereinrichtung in Blickrichtung des Pfeiles "12" in Figur 11;
- Figuren 13 und 14:: Darstellungen entsprechend den Figuren 5 und 6 bzw. 9 und 10 bei der Behälterfixiereinrichtung gemäß Figur 11; und
- Figur 15:: eine Darstellung entsprechend Figur 1 bei einer weiteren bevorzugten Ausführungsform der erfindungsgemäßen Vorrichtung zum Verarbeiten pharmazeutischer Behälter.

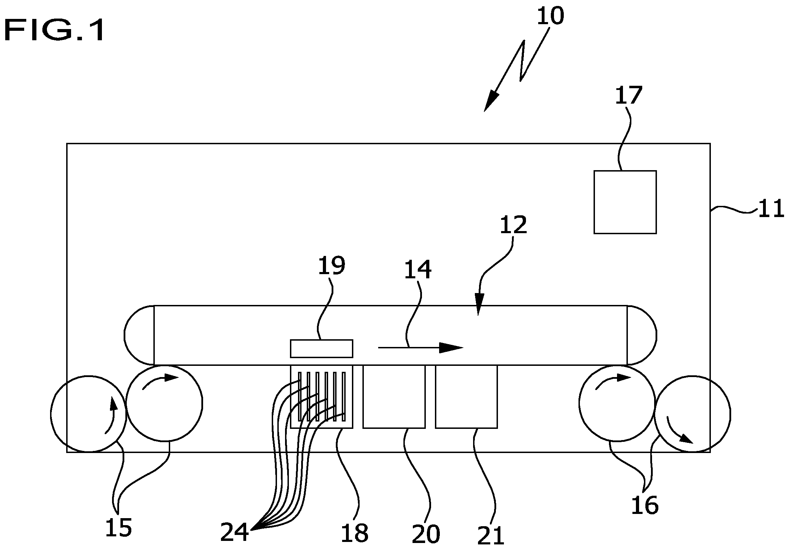

Figur 1 zeigt in einer schematischen Darstellung eine mit dem Bezugszeichen 10 belegte vorteilhafte Ausführungsform der erfindungsgemäßen Vorrichtung zum Verarbeiten pharmazeutischer Behälter. Die Vorrichtung 10 ist in Draufsicht dargestellt und umfasst auf einem Gestell 11 eine Transporteinrichtung 12. Die Transporteinrichtung 12 ist eine umlaufende Transporteinrichtung, bei der Behälter 13 zum Verarbeiten längs einer insbesondere geradlinigen Transportrichtung 14 transportiert werden können.

Die Behälter 13 können über Einkoppelelemente 15, beispielsweise Transporträder, der Transporteinrichtung 12 zugeführt werden. Über Auskoppelelemente 16, beispielsweise Transporträder, können die verarbeiteten Behälter 13 von der Transporteinrichtung 12 entfernt werden.

Die Vorrichtung 10 umfasst insgesamt eine Steuereinrichtung 17, die sämtliche Vorgänge der Vorrichtung 10 steuert.

An der Transporteinrichtung 12 sind mehrere Verarbeitungsstationen zum Verarbeiten der Behälter 13 angeordnet.

Die Verarbeitungsstationen umfassen eine Wiegestation 18, bei der es sich um eine bevorzugte Ausführungsform der erfindungsgemäßen Wiegestation handelt.

Darüber hinaus umfassen die Verarbeitungsstationen eine Befüllstation 19, die vorliegend an der Wiegestation 18 angeordnet ist, sowie diesen beiden Stationen in der Transportrichtung 14 nachgelagert eine Schließstation 20 zum Verschließen befüllter Behälter 13 und eine Kontrollstation 21 zur Nachkontrolle der verschlossenen Behälter 13.

Die Verarbeitungsstationen können auch als Verarbeitungseinrichtungen bezeichnet werden, zum Beispiel als Wiegeeinrichtung, Befülleinrichtung, Schließeinrichtung etc.

Bei der Vorrichtung 10 besteht die Möglichkeit, die Behälter 13 an der Wiegestation 18 zu wiegen und dabei das unbefüllte Gewicht (Taragewicht) zu bestimmen. An der Wiegestation 18 können die Behälter 13 über die Befüllstation 19 befüllt werden. Das Gewicht befüllter Behälter 13 (Bruttogewicht) kann ebenfalls an der Wiegestation 18 kontrolliert werden und erforderlichenfalls nachgefüllt werden. Überfüllte Behälter 13 können beispielsweise später ausgeschleust werden.

Im vorliegenden Beispiel wird eine flüssige pharmazeutische Substanz in die Behälter 13 gefüllt. Füllelemente, beispielsweise Nadeln, der Befüllstation 19 können zu diesem Zweck in die Behälter 13 eingreifen.

Bei der Vorrichtung 10 kann insbesondere eine 100%-Prozesskontrolle (IPC) durchgeführt werden.

Die Erfindung wird nachfolgend am Beispiel von Behältern 13 in Gestalt von Spritzen 22 erläutert. Die Erfindung ist jedoch hierauf nicht beschränkt. Die Erfindung kann beispielsweise auch mit andersartigen Behältern 13 zum Einsatz kommen, insbesondere Karpulen und/oder Ampullen. Auch eine Anwendung der Erfindung mit Behältern 13 in Gestalt von Vials ist denkbar.

Die Spritze 22 umfasst vorliegend einen kappenförmigen Nadelschutz zum Schutz der Spritzennadel. Der Nadelschutz wird als Bestandteil des Behälters 13 angesehen.

Vorteilhaft ist die Erfindung insbesondere im Zusammenhang mit nicht-standfesten Behältern wie Spritzen, Karpulen und/oder Ampullen.

Die Transporteinrichtung 12 ist eine getaktete Transporteinrichtung, bei der eine Mehrzahl von Behältern 13 schrittweise bewegt wird. Dies sind vorliegend sechs Behälter 13, wobei deren Anzahl auch unterschiedlich sein könnte. Eine jeweilige Verarbeitungsstation ist zur getakteten Verarbeitung der Mehrzahl der Behälter 13 ausgestaltet.

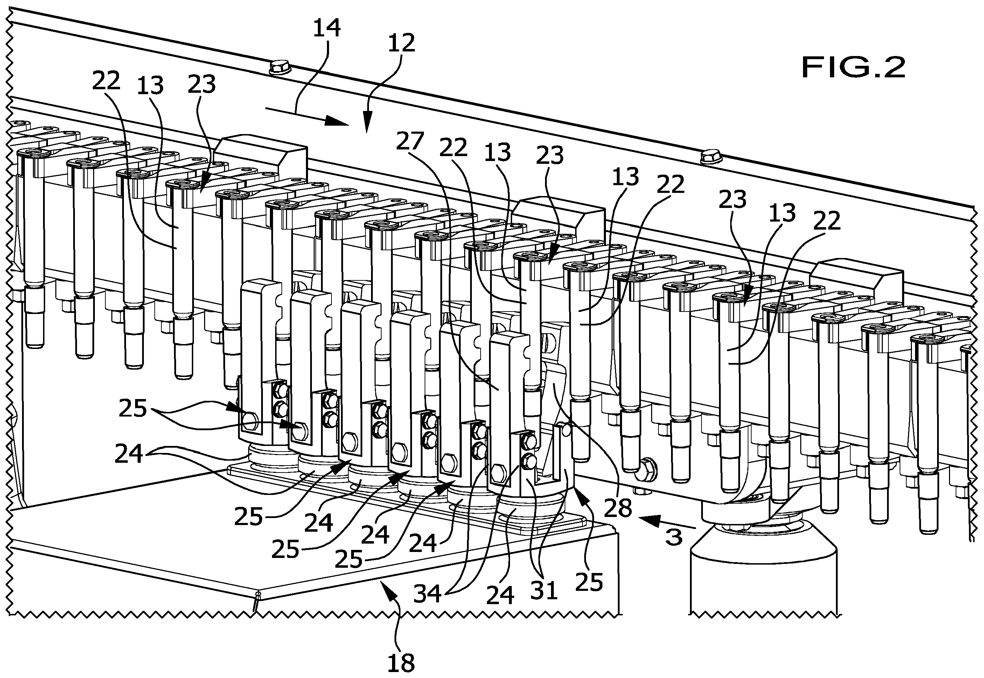

Wie insbesondere aus Figur 2 hervorgeht, umfasst die Transporteinrichtung 12 für jeden Behälter 13 ein Greifelement 23, das unter Ansteuerung durch die Steuereinrichtung 17 gezielt in eine Öffnungsstellung überführt werden kann, um den Behälter 13 freizugeben. Umgekehrt kann das Greifelement 23 in eine Schließstellung überführt werden, um den Behälter 13 zu greifen und zu transportieren.

Die Greifelemente 23 sind Greifzangen, die vorliegend zwei relativ zueinander bewegliche Branchen umfassen.

Entlang der Transportrichtung 14 umfasst die Wiegestation 18 entsprechend der Stellenanzahl mehrere Wiegezellen 24 (Figuren 1 und 2).

Die Wiegestation 18 umfasst ferner entsprechend der Stellenzahl eine Mehrzahl der erfindungsgemäßen Behälterfixiereinrichtung 25 in bevorzugter Ausführungsform. Einer jeweiligen Wiegezelle 24 ist eine Behälterfixiereinrichtung 25 zugeordnet.

Die Behälterfixiereinrichtungen 25 sind längs der Transportrichtung 14 angeordnet und gleichmäßig voneinander beabstandet. Dieser Abstand entspricht vorzugsweise dem Abstand benachbarter Greifelemente 23 an der Transporteinrichtung 12 voneinander, dem sogenannten "Stich".

Beim getakteten Transport werden die Behälter 13 entsprechend der Stellenzahl in der Transportrichtung 14 den Behälterfixiereinrichtungen 25 zugeführt, gewogen, befüllt, erneut gewogen und anschließend von den Behälterfixiereinrichtungen 25 entfernt. Hierauf wird nachfolgend eingegangen.

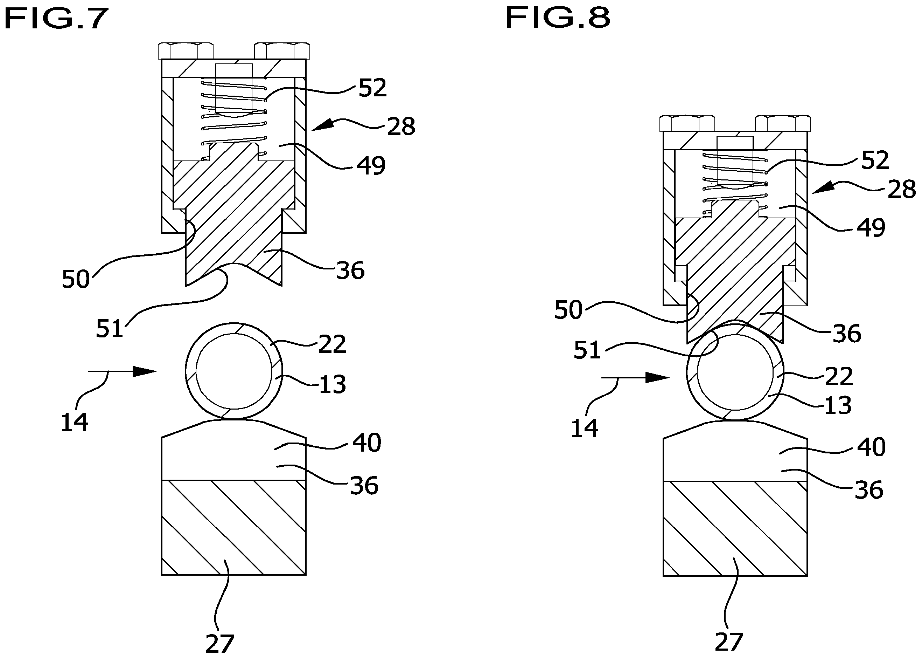

Nachfolgend wird unter Verweis auf die Figuren 2 bis 8 die erste bevorzugte Ausführungsform 25 der erfindungsgemäßen Behälterfixiereinrichtung beschrieben. Anschließend folgen weitere bevorzugte Ausführungsformen. Für gleiche oder gleichwirkende Merkmale und Bauteile werden identische Bezugszeichen benutzt. Es wird lediglich auf die wesentlichen Unterschiede der unterschiedlichen Ausführungsformen eingegangen. Die im Zusammenhang mit der Behälterfixiereinrichtung 25 gemachten Erläuterungen und mit dieser erzielbare Vorteile gelten für die übrigen Behälterfixiereinrichtungen in entsprechender Weise.

Die Behälterfixiereinrichtung 25 umfasst einen Grundkörper 26 und vorliegend zwei Fixierelemente 27, 28 zum Fixieren des Behälters 13. Der Grundkörper 26 weist einen platten- oder tellerförmigen Basisabschnitt 29 auf. Am Basisabschnitt 29 ist ein Verbindungselement 30 zum lösbaren Verbinden mit der Wiegezelle 24 angeordnet. Das Verbindungselement 30 kann formschlüssig in eine in der Zeichnung nicht dargestellte Aufnahme der Wiegezelle 24 eingeführt und darin verrastet werden.

Auf diese Weise kann die Behälterfixiereinrichtung 25, bei der es sich insbesondere um ein "Formatteil" handeln kann, abhängig von den zu verarbeitenden Behältern 13 getauscht werden. Die Vorrichtung 10 kann vorzugsweise mehrere Formatsätze mit an die jeweiligen Behälter 13 angepassten Behälterfixiereinrichtungen 25 umfassen.

Der Grundkörper 26 umfasst zwei Halteabschnitte 31, wobei jeder Halteabschnitt 31 einem Fixierelement 27 oder 28 zugeordnet ist. Die Halteabschnitte 31 stehen vom Basisabschnitt 29 in Höhenrichtung nach oben ab, insbesondere in vertikaler Richtung. Ein jeweiliger Halteabschnitt 31 weist ein distales Ende 32 auf, bezogen auf den Basisabschnitt 29.

Die Halteabschnitte 31 sind voneinander beabstandet, so dass am Grundkörper 26 zwischen den Halteabschnitten 31 Durchgangsöffnungen 33 gebildet sind. Vorliegend sind zwei Durchgangsöffnungen 33 vorhanden, die in der Transportrichtung 14 voneinander beabstandet sind, d.h. insbesondere in der Transportrichtung 14 "vorne" und "hinten".

Jeder Halteabschnitt 31 umfasst zwei in der Transportrichtung 14 voneinander beabstandete Haltesegmente 34. Ein jeweiliges Fixierelement 27, 28 ist zwischen den Haltesegmenten 34 angeordnet und greift vorliegend formschlüssig zwischen die Haltesegmente 34 ein.

In Draufsicht längs der Transportrichtung 14 weist der Grundkörper 26 dabei eine im Wesentlichen U-Form auf. Die Halteabschnitte 31 sind in einer Querrichtung voneinander beabstandet, die quer und insbesondere senkrecht zur Transportrichtung 14 ausgerichtet ist.

Am Grundkörper 26 ist eine Ausnehmung 35 gebildet. Die Ausnehmung 35 ist vorliegend zentral am Basisabschnitt 29 angeordnet und sacklochförmig gebildet.

Die Fixierelemente 27 und 28 unterscheiden sich dadurch, dass das Fixierelement 27 an einem Halteabschnitt 31 unbeweglich festgelegt ist, wohingegen das Fixierelement 28 am anderen Halteabschnitt 31 beweglich gehalten ist.

Beide Fixierelemente 27, 28 sind im Wesentlichen fingerförmig und weisen zum Fixieren des Behälters 13 ein Fixierglied 36 auf, das an den Behälter 13 angelegt werden kann, um diesen zu fixieren.

Die Fixierglieder 36 sind an den distalen Endabschnitten 37 der Fixierelemente 27, 28 angeordnet, bezogen auf den Basisabschnitt 29.

Bezogen auf den Basisabschnitt 29 weisen die Fixierelemente 27, 28 einen proximalen Endabschnitt 38 auf. Der Endabschnitt 38 des Fixierelementes 27 erstreckt sich bis zum Basisabschnitt 29, der Endabschnitt 38 des Fixierelementes 28 bis nahe an den Basisabschnitt 29.

Insbesondere sind die Fixierglieder 36 oben an den Fixierelementen 27, 28 angeordnet.

Zwischen den Fixierelementen 27, 28 ist ein infolge der Bewegung des Fixierelementes 28 größenveränderlicher Zwischenraum 39 gebildet. Die Fixierelemente 27, 28 liegen einander in Bezug auf den Zwischenraum 39 vorliegend in der Querrichtung direkt gegenüber.

Bezogen auf die Transportrichtung 14 ist der Zwischenraum 39 zwischen den Durchgangsöffnungen 33 angeordnet.

Die Fixierelemente 27, 28 sind vorliegend so bemessen, dass sie in Höhenrichtung über die Halteabschnitte 31 hinausragen. Dabei sind die Fixierelemente 27, 28 vorliegend mehr als doppelt so lang wie die Halteabschnitte 31, wobei dieses Verhältnis auch anders ausfallen könnte. Insgesamt kann bei der Behälterfixiereinrichtung 25 eine kompakte Bauform erzielt werden.

Das Fixierelement 27 ist mit dem Halteabschnitt 31 beispielsweise durch Verschraubung verbunden. Das Fixierglied 36 des Fixierelementes 27 umfasst vorliegend zwei Fixierabschnitte 40, die in den Zwischenraum 39 ragen. Die Fixierabschnitte 40 sind voneinander entlang der Höhenrichtung beabstandet.

Wie nachfolgend ausgeführt wird, verläuft in der Höhenrichtung eine Betätigungsrichtung 41 der Behälterfixiereinrichtung 25. Zwischen den Fixierabschnitten 40 ist eine Aussparung angeordnet.

Das Fixierelement 27 ist im Wesentlichen vertikal in der Höhenrichtung ausgerichtet.

Das bewegliche Fixierelement 28 ist am Halteabschnitt 31 um eine Schwenkachse 42 schwenkbar gelagert. Die Schwenkachse 42 verläuft parallel zur Transportrichtung 14 und im vorliegenden Fall insbesondere senkrecht zur Betätigungsrichtung 41. Ein Lagerelement zur Lagerung des Fixierelementes 28 ist am distalen Ende 32 des Halteabschnittes 31 angeordnet.

Das Fixierelement 28 bildet auf diese Weise einen zweiarmigen Hebel mit einem ersten Hebelarm 43, der das Fixierglied 36 umfasst, und einem zweiten Hebelarm 44. Vorliegend ist der Hebelarm 43 länger als der Hebelarm 44. Der Hebelarm 43 ist oberhalb des Hebelarms 44 angeordnet.

Das Fixierelement 28 umfasst ein Betätigungsglied 45, vorliegend am Endabschnitt 38 und damit am zweiten Hebelarm 44. Das Betätigungsglied 45 und das Fixierglied 36 sind auf einander gegenüberliegenden Seiten der Schwenkachse 42 angeordnet.

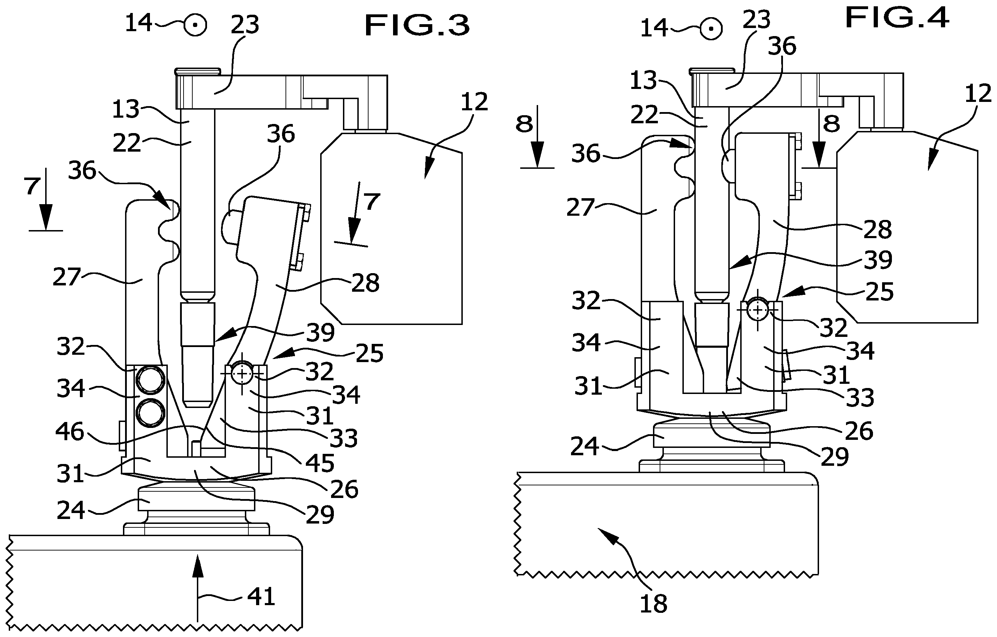

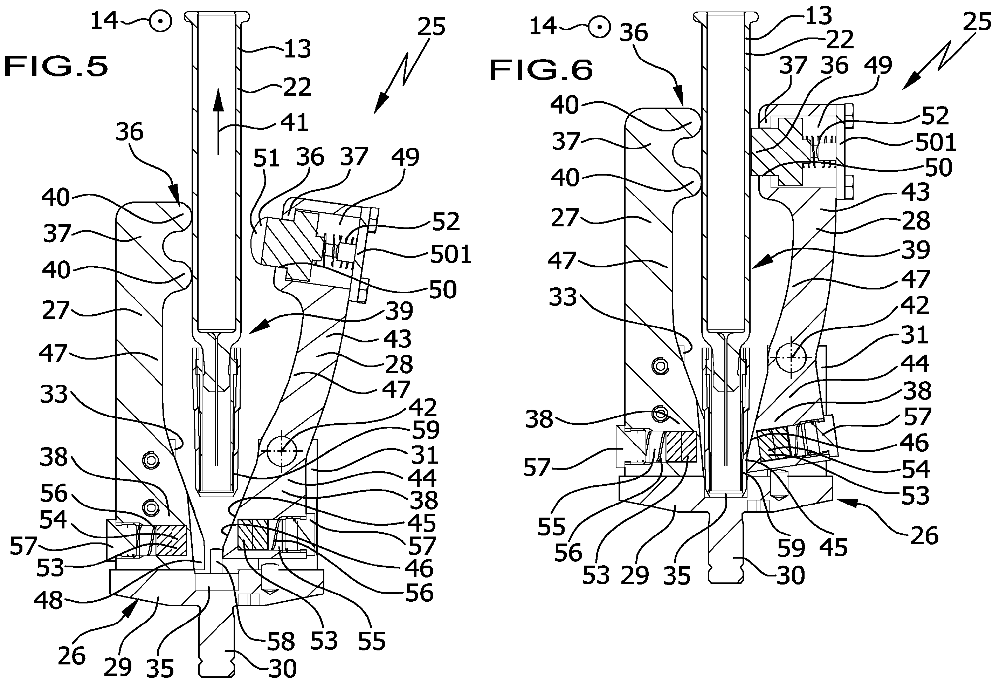

Das Betätigungsglied 45 umfasst eine in einer Freigabestellung des Fixierelementes 28 schräg bezüglich der Betätigungsrichtung 41 verlaufende Auflauffläche 46 (Figuren 3 und 5). Am Betätigungsglied 45 verbreitert sich das Fixierelement 28 in Richtung des Fixierelementes 27, unter Verschmälerung des Zwischenraums 39.

Das Fixierelement 28 weist einen zwischen dem Betätigungsglied 45 und dem Fixierglied 36 angeordneten zurückgesetzten Abschnitt 47 auf, im Bereich dessen das Fixierelement 28 bezüglich dem Zwischenraum 39 im Vergleich zum Betätigungsglied 45 und zum Fixierglied 36 zurückgesetzt ist. Im Bereich des zurückgesetzten Abschnittes 47 ist der Zwischenraum 39 verbreitert. Ein entsprechender zurückgesetzter Abschnitt 47 ist auch am Fixierelement 27 gebildet.

Das Fixierelement 27 umfasst vorliegend am Endabschnitt 38 kein Betätigungsglied, jedoch eine Aussparung 48 (Figuren 5 und 6).

Durch die Form der Fixierelemente 27, 28 erweitert sich der Zwischenraum ausgehend von den Endabschnitten 38 in der Höhenrichtung und verschmälert sich anschließend wieder im Bereich der Fixierglieder 36.

Beim Fixierelement 28 ist das Fixierglied 36 in einer Aufnahme 49 am Endabschnitt 37 angeordnet. Die Aufnahme 49 bildet eine Führung für das Fixierglied 36, das durch eine Öffnung 50 ragt. Dabei ragt das Fixierglied 36 in den Zwischenraum 39 in Richtung des Behälters 13. Die Aufnahme ist mittels eines Abdeckelementes 501 auf der gegenüberliegenden Seite verschlossen.

Der außerhalb der Aufnahme 49 angeordnete Abschnitt des Fixiergliedes 36 umfasst eine konkave Ausnehmung 51. Die Ausnehmung 51 ist in Form und Größe an den Behälter 13 angepasst. Der Behälter 13 kann in die Ausnehmung 51 insbesondere formschlüssig eingreifen, wobei das Fixierglied 36 den Behälter 13 seitlich umgreift.

Das Fixierglied 36 kann in der Aufnahme 49 entgegen der Wirkung eines Vorspannelementes 52 verschoben werden. Das Vorspannelement 52 ist als Druckfeder in Gestalt einer Schraubenfeder ausgestaltet, am Abdeckelement 501 als Stützglied abgestützt und beaufschlagt das Fixierglied 36 mit einer in Richtung des Zwischenraums 39 und des Behälters 13 gerichteten Vorspannkraft. Entgegen der Vorspannkraft wird das Fixierglied 36 in die Aufnahme 49 weiter hineingeschoben. Korrespondierende Anschläge am Rand der Aufnahme 49 und am Fixierglied 36 begrenzen den Verschiebeweg des Fixiergliedes 36 unter der Wirkung der Vorspannkraft.

Wie insbesondere aus den Figuren 5 und 6 hervorgeht, umfassen die Fixierelemente 27, 28 Kopplungselemente 53. Über die Kopplungselemente 53 können die Fixierelemente 27, 28 kontaktlos und insbesondere dann koppeln, wenn das Fixierelement 28 wie nachfolgend erläutert die Freigabestellung einnehmen.

Vorliegend sind die Kopplungselemente 53 zusammenwirkende Magnetelemente 54, wobei an jedem Endabschnitt 38 mindestens ein Magnetelement 54 angeordnet ist.

Im Endabschnitt 38 ist jeweils eine Aufnahme 55 für das Magnetelement 54 (vorliegend jeweils zwei Stück) gebildet. Die Magnetelemente 54 sind in der Aufnahme 55 formschlüssig angeordnet und werden mittels eines Vorspannelementes 56 in Richtung des jeweils anderen Fixierelementes 27, 28 mit einer Vorspannkraft beaufschlagt. Ein Abdeckelement 57, vorliegend ausgestaltet als Stopfen, verschließt die Aufnahme 55.

Die Vorspannelemente 56 sind vorliegend Druckfedern, ausgestaltet als Schraubenfedern.

Die Magnetelemente 54 an den Fixierelementen 27, 28 sind so einander entgegengesetzt gepolt, dass die Endabschnitte 38 infolge der Magnetkraft aufeinander zu gezogen werden. Umgekehrt können die Endabschnitte 38 entgegen der Magnetkraft voneinander entfernt werden, bei einer Bewegung des Fixierelementes 28.

Am Grundkörper 26, vorliegend am Basisabschnitt 29, ist ein Anschlagelement 58 für das bewegliche Fixierelement 28 angeordnet, um dessen Schwenkbewegung in Richtung auf das Fixierelement 27 (bezogen auf die Endabschnitte 38) zu begrenzen. Das Anschlagelement 58 ist längs der Transportrichtung 14 seitlich neben der Ausnehmung 54 angeordnet, so dass diese nach oben frei ist (Figur 5).

Bei der Vorrichtung 10 kann eine Relativbewegung des Behälters 13 und des Grundkörpers 26 ausgelöst werden, um das Fixierelement 28 zum Halten des Behälters 13 an der Behälterfixiereinrichtung 25 von einer Freigabestellung in eine Fixierstellung zu bewirken. Dabei besteht die Möglichkeit, die Behälterfixiereinrichtung 25 durch Anheben der Wiegestation 18 zu bewegen. Diese Bewegung ist in der Zeichnung vorliegend durch die Betätigungsrichtung 41 gekennzeichnet.

Es versteht sich, dass die Relativbewegung auch dadurch erwirkt werden könnte, dass der Behälter 13 in einer Betätigungsrichtung, dann mit unterschiedlicher Orientierung, in Richtung der Behälterfixiereinrichtung 25 abgesenkt werden könnte.

In beiden Fällen führt die Relativbewegung in der Betätigungsrichtung dazu, dass der Behälter 13 das Betätigungsglied 45 kontaktieren kann.

Die Funktionsweise der Behälterfixiereinrichtung 25 wird nachfolgend erläutert.

Die getaktet zugeführten Behälter 13 können in der Transportrichtung 14 in den jeweiligen Zwischenraum 39 eingeführt werden und nehmen dann die in den Figuren 2, 3, 5 und 7 dargestellte Position an den Behälterfixiereinrichtungen 25 ein. Vorteilhaft ist es dabei, dass die Behälter 13 in der Transportrichtung 14 durch die Behälterfixiereinrichtung 25 hindurchgeführt werden können. Dies gibt die Möglichkeit, einen Behälter 13 jeweils durch in der Transportrichtung 14 vorgelagerte Behälterfixiereinrichtungen 25 hindurch in die ihm zugeordnete Behälterfixiereinrichtung 25 einzuführen.

Die Einführung des Behälters 13 in den Zwischenraum 39 kann vorliegend auch dadurch erfolgen, dass der Behälter 13 mit einem unteren Behälterabschnitt 59 durch die Durchgangsöffnung 33 hindurchgeführt werden kann. Dies bietet zum Beispiel den Vorteil, dass die Behälterfixiereinrichtung 25 so nah wie möglich am Behälter 13 positioniert werden kann, um die Relativbewegung möglichst gering zu halten.

Vorliegend ist der Behälterabschnitt 59 durch den Nadelschutz des Behälters 13 gebildet. Die Erfindung ist jedoch nicht hierauf beschränkt.

Anfangs nehmen die Fixierelemente 27, 28 einen derartigen Abstand zueinander so ein, dass der Zwischenraum 39 frei zum Zuführen des Behälters 13 ist. Hierbei nimmt das Fixierelement 28 eine Freigabestellung ein. Die Magnetelemente 54 koppeln, so dass das Fixierelement 28 in der Freigabestellung unter Anliegen am Anschlagelement 58 gehalten ist.

In Höhenrichtung ist das untere Ende des Behälters 13 noch oberhalb des Betätigungsgliedes 45 angeordnet (Figuren 3 und 5) und vorzugsweise frei von Kontakt mit diesen.

Durch Bewegen der Wiegestation 18 in der Betätigungsrichtung 41 (oder alternativ des Behälters 13 in der entgegengesetzten Richtung) gelangt der Behälter 13 vorliegend mit dem unteren Ende in Kontakt mit dem Betätigungsglied 45. Durch diesen Kontakt wird das Fixierglied 28 um die Schwenkachse 42 verschwenkt. Die Verschwenkung erfolgt entgegen der Magnetkraft der Magnetelemente 54.

Das Fixierelement 28 kann bis in eine Fixierstellung verschwenkt werden (Figuren 4, 6 und 8). Die Fixierstellung nimmt das Fixierelement 28 insbesondere dann ein, wenn die Wiegestation 18 so weit wie möglich angehoben worden ist. Dabei ist die Behälterfixiereinrichtung 25 so weit angehoben, bis das untere Ende des Behälters 13 in die Ausnehmung 35 eingreift. Hierbei kontaktiert der Behälter 13 weiterhin das Betätigungsglied 45.

Der Behälter 13 greift unten in die Aussparung 48 ein und ist frei von Kontakt mit dem Endabschnitt 38 des Fixierelementes 27.

Durch die Ausgestaltung des Fixierelementes 28 als schwenkbarer Hebel gelangt das Fixierglied 36 des Fixierelementes 28 zur Anlage an den Behälter 13, der in die Ausnehmung 51 eingreift und das Fixierglied 36 entgegen der Vorspannkraft des Vorspannelementes 52 verschiebt.

Gleichzeitig gelangt der Behälter 13 zur Anlage am Fixierglied 36 des Fixierelementes 27. Das Fixierglied 36 des Fixierelementes 28 greift zwischen die Fixierabschnitte 40 ein, bezogen auf die Höhenrichtung. Die Höhenrichtung entspricht der Erstreckungsrichtung des Behälters 13.

Nimmt das Fixierelement 28 die Fixierstellung ein, ist der Behälter 13 zuverlässig an der Behälterfixiereinrichtung 25 fixiert. Die Ausnehmung 35 und die Ausnehmung 51 erlauben insbesondere eine Zentrierung.

Der Wiegevorgang zum Ermitteln des Taragewichtes kann durchgeführt werden. Vorzugsweise wird der Behälter 13 mittels der Befüllstation 19 befüllt und anschließend der Wiegevorgang zum Ermitteln des Bruttogewichtes durchgeführt.

Nach dem letzten Wiegevorgang erfolgt eine Bewegung der Wiegestation 18 und der Behälterfixiereinrichtung 25 relativ zueinander entgegen der ursprünglichen Betätigungsrichtung 41. Hierbei wird im vorliegenden Beispiel die Wiegestation 18 abgesenkt (oder alternativ der Behälter 13 angehoben).

Beim Absenken der Wiegestation 18 verschwenkt das Fixierelement 28 nach und nach zurück in die Freigabestellung. Die Schwenkbewegung erfolgt vorzugsweise unter Schwerkraft und unter der Magnetkraft der Magnetelemente 54.

Nimmt das Fixierelement 28 die Freigabestellung ein, kann der Behälter 13 in der Transportrichtung 14 aus dem Zwischenraum 39 durch die Durchgangsöffnung 33 abtransportiert werden.

Während des Wiegevorgangs nimmt das Greifelement 23 die Öffnungsstellung ein. Vorzugsweise wird das Greifelement 23 erst geöffnet, wenn das Fixierelement 28 die Fixierstellung einnimmt. Umgekehrt wird das Greifelement 23 bevorzugt geschlossen, bevor die Wiegestation 18 abgesenkt wird.

Durch die erfindungsgemäße Ausgestaltung der Behälterfixiereinrichtung 25 können kurze Taktzeiten bei der Wiegestation 18 erzielt werden, wie dies bereits vorstehend erläutert wurde.

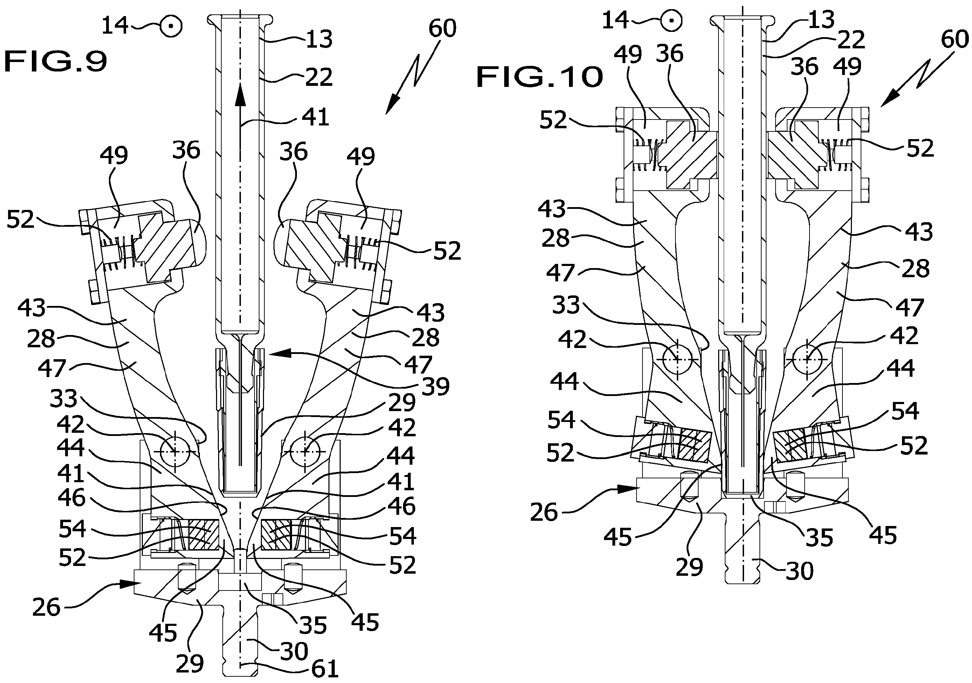

Die Figuren 9 und 10 zeigen eine mit dem Bezugszeichen 60 belegte vorteilhafte Ausführungsformen der erfindungsgemäßen Behälterfixiereinrichtung in einer den Figuren 5 bzw. 6 entsprechenden Weise.

Bei der Behälterfixiereinrichtung 60 sind zwei bewegliche Fixierelemente 28 vorgesehen, die jeweils von einer Freigabestellung (Figur 9) in eine Fixierstellung (Figur 10) verschwenkt werden können.

Die Fixierelemente 28 sind relativ zueinander symmetrisch ausgestaltet bezüglich einer Mittelebene 61 der Behälterfixiereinrichtung 60, welche die Transportrichtung 14 enthält und vorliegend eine Vertikalebene ist. Die Fixierelemente 28 sind insbesondere identisch ausgestaltet. Im Übrigen wird auf obige Ausführungen verwiesen.

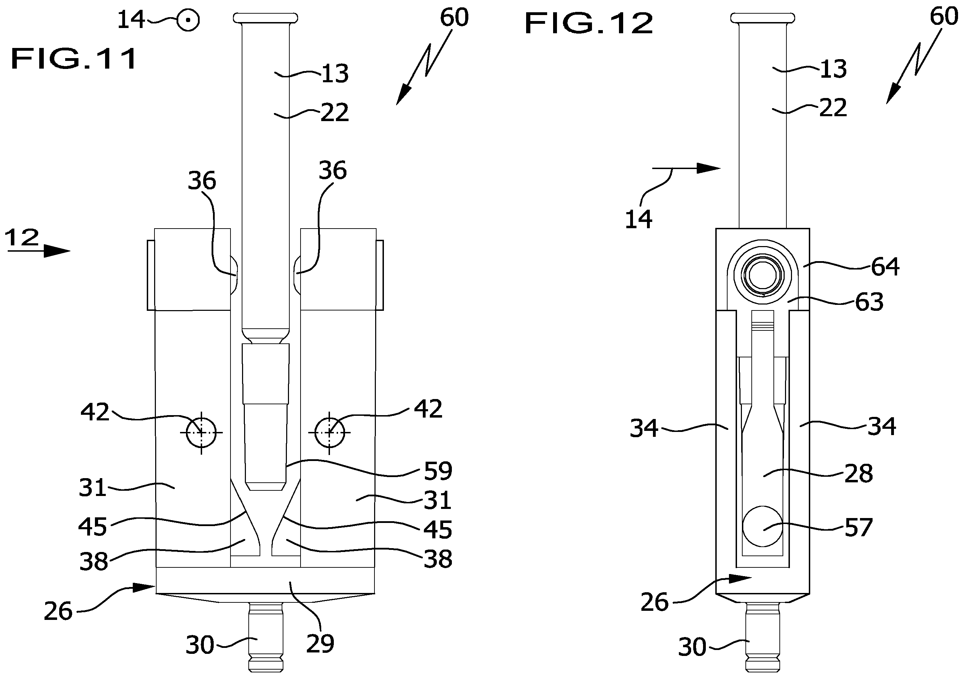

Die Figuren 11 bis 14 zeigen eine mit dem Bezugszeichen 62 belegte vorteilhafte Ausführungsform der erfindungsgemäßen Behälterfixiereinrichtung.

Ebenso wie bei der Behälterfixiereinrichtung 60 sind bei der Behälterfixiereinrichtung 62 zwei bewegliche Fixierelemente 28 vorgesehen, die relativ zueinander vorzugsweise symmetrisch ausgestaltet sind. Aus diesem Grund wird nachfolgend nur auf eines der Fixierelemente 28 eingegangen.

Bei der Behälterfixiereinrichtung 62 weisen die Halteabschnitte 31 eine größere Erstreckung auf als bei den obigen Ausführungsformen und sind im Wesentlichen in der Höhenrichtung so lang wie die Fixierelemente 28. Die Schwenkachse 42 ist ungefähr mittig im Bereich der Halteabschnitte 31 und im Wesentlichen mittig an den Fixierelementen 28 angeordnet.

Das Fixierelement 28 umfasst einen Aufnahmekörper 63, der die Aufnahme 49 bildet und das Fixierglied 36 aufnimmt. Der Aufnahmekörper 63 ist in einem vom Halteabschnitt 31 gebildeten Führungsabschnitt 64 verschieblich geführt. Die Verschieberichtung ist dabei vorliegend quer und insbesondere senkrecht zur Betätigungsrichtung 41 und zur Transportrichtung 14 ausgerichtet.

Der Aufnahmekörper 63 kann beispielsweise auf Schultern der Haltesegmente 34 aufliegen und auf diesen verschoben werden (Figur 12).

Das Fixierelement 28 umfasst zur schwenkbaren Lagerung am Halteabschnitt 31 einen Schwenkabschnitt 65. Der Schwenkabschnitt 65 ist mit dem Aufnahmekörper 63 über ein Gelenk gekoppelt. Vorliegend ist distal bezogen auf den Basisabschnitt 69 am Schwenkabschnitt 65 eine insbesondere langlochförmige Aufnahme 66 gebildet. Ein Lagerelement 67, ausgestaltet als Zapfen, des Aufnahmekörpers 63 greift in die Aufnahme 66 ein. Es versteht sich, dass die Aufnahme 66 und das Lagerelement 67 auch vertauscht sein könnten.

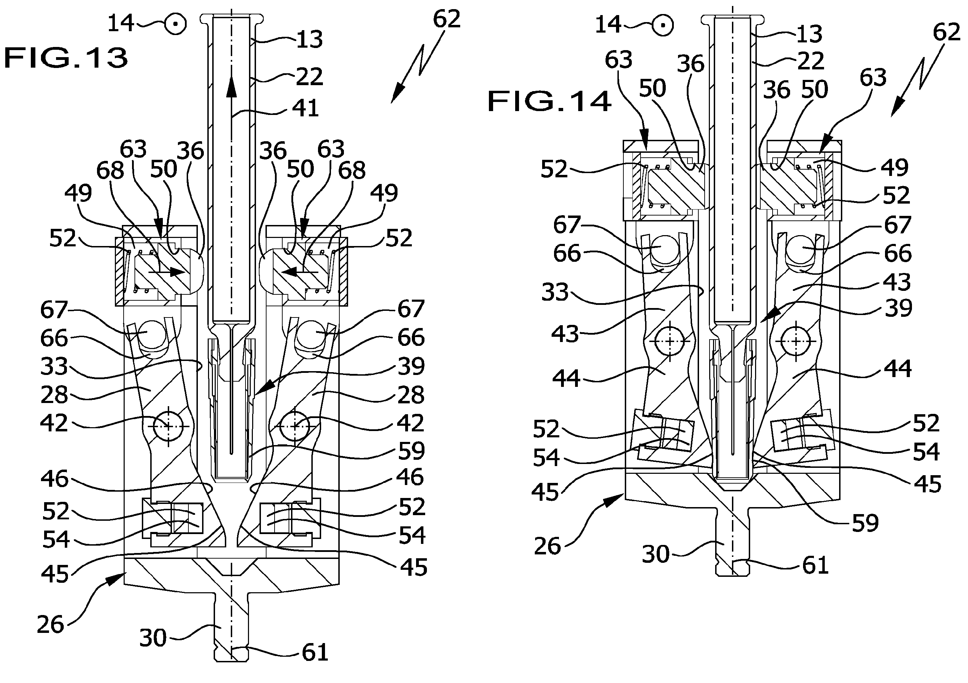

Bei einer Verschwenkung des Schwenkabschnittes 65 wird der Aufnahmekörper 63 zusammen mit dem Fixierglied 36 in Richtung auf den Behälter 13 verschoben. Der Pfeil 68 in Figur 13 kennzeichnet die diesbezügliche Verschieberichtung. Die Anpassung der Relativposition des Aufnahmekörpers 63 und des Schwenkabschnittes 65 erfolgt durch eine Bewegung des Lagerelementes 67 in der Aufnahme 66. Wird das Fixierelement 28 in entgegengesetzter Richtung verschwenkt, um von der Fixierstellung in die Freigabestellung überführt zu werden, erfolgt die Verschiebung des Aufnahmekörpers 63 weg vom Behälter 13 in entgegengesetzter Verschieberichtung.

Es versteht sich, dass die Behälterfixiereinrichtung 60 oder die Behälterfixiereinrichtung 62 anstelle der und/oder ergänzend zur Behälterfixiereinrichtung 25 Bestandteil der Wiegestation 18 und der Vorrichtung 10 sein können.

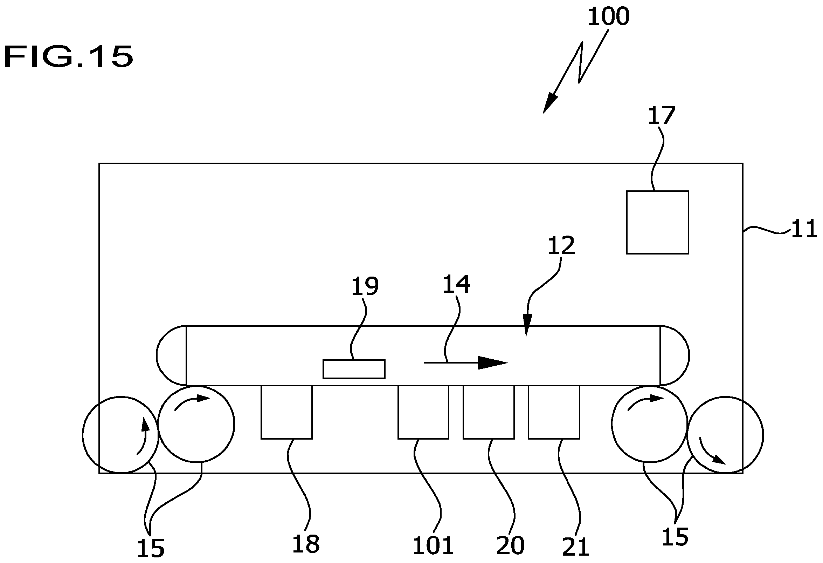

Die Figur 15 zeigt eine mit dem Bezugszeichen 100 belegte vorteilhafte Ausführungsform der erfindungsgemäßen Vorrichtung zum Verarbeiten pharmazeutischer Behälter. Für gleiche oder gleichwirkende Merkmale und Bauteile der Vorrichtungen 10 und 100 werden identische Bezugszeichen benutzt.

Bei der Vorrichtung 100 sind zwei in der Transportrichtung 14 hintereinander angeordnete Wiegestationen 18 und 101 vorgesehen, die vorzugsweise identisch ausgestaltet sind. In Bezug auf die Wiegestation 18 wird auf die voranstehenden Ausführungen verwiesen. Das Taragewicht der unbefüllten Behälter 13 wird mittels der Wiegestation 18 ermittelt. Mittels der Wiegestation 101 wird das Bruttogewicht der befüllten Behälter 13 ermittelt.

Die Befüllstation 19 ist zwischen den Wiegestationen 18, 101 angeordnet. Es besteht vorzugsweise die Möglichkeit, die Behälter 13 während des Transports von der Wiegestation 18 zur Wiegestation 101 zu befüllen. Erforderlichenfalls kann vorzugsweise nachgefüllt werden, während die Behälter 13 an der Wiegestation 101 gehalten sind.

### Bezugszeichenliste

- 10: Vorrichtung
- 11: Gestell
- 12: Transporteinrichtung
- 13: Behälter
- 14: Transportrichtung
- 15: Einkoppelelement
- 16: Auskoppelelement
- 17: Steuereinrichtung
- 18: Wiegestation
- 19: Befüllstation
- 20: Schließstation
- 21: Kontrollstation
- 22: Spritze
- 23: Greifelement
- 24: Wiegezelle
- 25: Behälterfixiereinrichtung
- 26: Grundkörper
- 27: Fixierelement
- 28: Fixierelement
- 29: Basisabschnitt
- 30: Verbindungselement
- 31: Halteabschnitt
- 32: distales Ende
- 33: Durchgangsöffnung
- 34: Haltesegment
- 35: Ausnehmung
- 36: Fixierglied
- 37: Endabschnitt
- 38: Endabschnitt
- 39: Zwischenraum
- 40: Fixierabschnitt
- 41: Betätigungsrichtung
- 42: Schwenkachse
- 43: erster Hebelarm
- 44: zweiter Hebelarm
- 45: Betätigungsglied
- 46: Auflauffläche
- 47: zurückgesetzter Abschnitt
- 48: Aussparung
- 49: Aufnahme
- 50: Öffnung
- 501: Abdeckelement
- 51: Ausnehmung
- 52: Vorspannelement
- 53: Kopplungselement
- 54: Magnetelement
- 55: Aufnahme
- 56: Vorspannelement
- 57: Abdeckelement
- 58: Anschlagelement
- 59: Behälterabschnitt
- 60: Behälterfixiereinrichtung
- 61: Mittelebene
- 62: Behälterfixiereinrichtung
- 63: Aufnahmekörper
- 64: Führungsabschnitt
- 65: Schwenkabschnitt
- 66: Aufnahme
- 67: Lagerelement
- 68: Verschieberichtung
- 100: Vorrichtung
- 101: Wiegestation

## Patentansprüche

1. Behälterfixiereinrichtung für pharmazeutische Behälter (13) zur Verwendung an einer Wiegestation (18; 101), umfassend
- einen Grundkörper (26) in Verbindung mit einer oder als Bestandteil einer Wiegezelle (24) der Wiegestation (18; 101),
- zwei oder mehr am Grundkörper (26) festgelegte Fixierelemente (27, 28), mit mindestens einem jeweiligen an den Behälter (13) anlegbaren Fixierglied (36), zwischen denen ein Zwischenraum (39) zum Aufnehmen eines Behälters (13) gebildet ist und von denen mindestens ein Fixierelement (27, 28) am Grundkörper (26) beweglich angeordnet ist,
wobei ein im Zwischenraum (39) angeordneter Behälter (13) bei einer Relativbewegung zum Grundkörper (26) in einer Betätigungsrichtung (41) ein Betätigungsglied (45) des mindestens einen beweglichen Fixierelementes (28) kontaktiert und dieses von einer Freigabestellung, in der der Behälter (13) in den Zwischenraum (39) einführbar und aus diesem entfernbar ist, in eine Fixierstellung überführbar ist, in der der Behälter (13) mittels der Fixierglieder (36) fixiert ist,
wobei die Behälterfixiereinrichtung (25; 60; 62) so ausgebildet ist, dass der Behälter (13) in einer Transportrichtung (14) in den Zwischenraum (39) einführbar ist, die quer und insbesondere senkrecht zur Betätigungsrichtung (41) ausgerichtet ist.

2. Behälterfixiereinrichtung nach Anspruch 1, **dadurch gekennzeichnet, dass** zumindest eines der Folgenden gilt:
- die Behälterfixiereinrichtung (25; 60; 62) umfasst nur ein bewegliches Fixierelement (28);
- die Behälterfixiereinrichtung (25; 60; 62) umfasst mindestens ein unbewegliches Fixierelement (27);
- die Behälterfixiereinrichtung (25; 60; 62) umfasst ein bewegliches Fixierelement (28) und ein unbewegliches Fixierelement (27) oder die Behälterfixiereinrichtung (25; 60; 62) umfasst zwei bewegliche Fixierelemente (28).

3. Behälterfixiereinrichtung nach einem der voranstehenden Ansprüche, **dadurch gekennzeichnet, dass** zumindest eines der Folgenden gilt:
- der Behälter (13) ist in der Transportrichtung (14) aus dem Zwischenraum (39) herausführbar, insbesondere ist der Behälter (13) in der Transportrichtung (14) durch die Behälterfixiereinrichtung (25; 60; 62) hindurchführbar;
- am Grundkörper (26) ist mindestens eine Durchgangsöffnung (33) gebildet, durch die hindurch der Behälter (13) in der Transportrichtung (14) in den Zwischenraum (39) einführbar ist, insbesondere sind zwei Durchgangsöffnungen (33) am Grundkörper (26) gebildet, durch die hindurch der Behälter (13) in den Zwischenraum (39) hinein- und aus diesem herausführbar ist.

4. Behälterfixiereinrichtung nach einem der voranstehenden Ansprüche, **dadurch gekennzeichnet, dass** der Grundkörper (26) zwei oder mehr Halteabschnitte (31) umfasst, die jeweils im Abstand zueinander angeordnet sind und an denen jeweils ein Fixierelement (27, 28) angeordnet ist.

5. Behälterfixiereinrichtung nach Anspruch 4, **dadurch gekennzeichnet, dass** der Grundkörper (26) einen beispielsweise platten- oder tellerförmigen Basisabschnitt (29) umfasst, von dem die Halteabschnitte (31) abstehen, und/oder an dem ein Verbindungselement (30) zum Verbinden mit einer Wiegezelle (24) angeordnet ist.

6. Behälterfixiereinrichtung nach einem der voranstehenden Ansprüche, **dadurch gekennzeichnet, dass** das mindestens eine bewegliche Fixierelement (28) am Grundkörper (26) um eine Schwenkachse (42) schwenkbar gelagert ist, wobei die Transportrichtung (14) vorzugsweise parallel zur Schwenkachse (42) ausgerichtet ist.

7. Behälterfixiereinrichtung nach Anspruch 6, **dadurch gekennzeichnet, dass** das mindestens eine bewegliche Fixierelement (28) einen zweiarmigen Hebel ausbildet, der einen ersten, das Fixierglied (36) umfassenden Hebelarm (43) und einen zweiten, das Betätigungsglied (45) umfassenden Hebelarm (44) umfasst.

8. Behälterfixiereinrichtung nach einem der voranstehenden Ansprüche, **dadurch gekennzeichnet, dass** zumindest eines der Folgenden gilt:
- der Behälter (13) liegt am Betätigungsglied (45) in der Fixierstellung des mindestens einen beweglichen Fixierelementes (28) an;
- der Grundkörper (26) umfasst eine Ausnehmung (35), in die der Behälter (13) im mittels der Behälterfixiereinrichtung (25; 60; 62) fixierten Zustand eingreift, vorzugsweise formschlüssig;
- das Fixierglied (36) mindestens eines Fixierelementes (27, 28) umfasst eine konkave, vorzugsweise an die Form und/oder die Größe des Behälters (13) angepasste Ausnehmung (51), in die der Behälter (13) in der Fixierstellung des mindestens einen beweglichen Fixierelementes (28) eingreift.

9. Behälterfixiereinrichtung nach einem der voranstehenden Ansprüche, **dadurch gekennzeichnet, dass** das Fixierglied (36) mindestens eines Fixierelementes (28) mittels eines Vorspannelementes (52) in Richtung auf den im Zwischenraum (39) angeordneten Behälter (13) vorgespannt ist.

10. Behälterfixiereinrichtung nach Anspruch 9, **dadurch gekennzeichnet, dass** am Fixierelement (28) eine Aufnahme (49) für das Fixierglied (36) gebildet ist, oder dass das Fixierelement (28) eine Aufnahme (49) umfasst, in der das Fixierglied (36) und das Vorspannelement (52) angeordnet sind und die eine Führung für das Fixierglied (36) bildet, wobei das Fixierglied (36) eine Öffnung (50) der Aufnahme (49) durchgreift und in Richtung des Behälters (13) ragt.

11. Behälterfixiereinrichtung nach Anspruch 10, **dadurch gekennzeichnet, dass** das Fixierelement (28) einen Aufnahmekörper (63) aufweist, der die Aufnahme (49) umfasst oder bildet, und der an einem Halteabschnitt (31) des Grundkörpers (26) verschieblich geführt und mit einem am Halteabschnitt (31) schwenkbar gelagerten Schwenkabschnitt (65) des Fixierelementes (28) gekoppelt ist und beim Verschwenken des Schwenkabschnittes (65) von diesem relativ zum Grundkörper (26) verschoben wird, wobei eine Verschieberichtung (68) des Aufnahmekörpers (63) insbesondere senkrecht zur Betätigungsrichtung (41) ausgerichtet ist.

12. Behälterfixiereinrichtung nach einem der voranstehenden Ansprüche, **dadurch gekennzeichnet, dass** zumindest eines der Folgenden gilt:
- das mindestens eine bewegliche Fixierelement (28) wird bei einer Relativbewegung des Behälters (13) und des Grundkörpers (26) entgegen der Betätigungsrichtung (41) selbsttätig von der Fixierstellung in die Freigabestellung überführt;
- die Behälterfixiereinrichtung (25; 60; 62) umfasst an zwei oder mehr Fixierelementen (27, 28) jeweils zusammenwirkende Kopplungselemente (53), um die Fixierelemente (27, 28) in der Freigabestellung miteinander insbesondere kontaktlos zu koppeln, wobei die Fixierelemente (27, 28) entgegen der Wirkung der Kopplungselemente (53) von der Freigabestellung in die Fixierstellung überführt werden.

13. Wiegestation für eine Vorrichtung (10; 100) zum Verarbeiten von pharmazeutischen Behältern (13), umfassend mindestens eine Wiegezelle (24) und mindestens eine dieser zugeordnete Behälterfixiereinrichtung (25; 60; 62) nach einem der voranstehenden Ansprüche, vorzugsweise eine Mehrzahl von Wiegezellen (24) und eine Mehrzahl von Behälterfixiereinrichtungen (25; 60; 62) nach einem der voranstehenden Ansprüche, wobei jeder Wiegezelle (24) eine Behälterfixiereinrichtung (25; 60; 62) zugeordnet ist.

14. Vorrichtung zum Verarbeiten pharmazeutischer Behälter (13), umfassend eine Transporteinrichtung (12), wobei die Behälter (13) an der Transporteinrichtung (12) mit jeweils mindestens einem Greifelement (23) gehalten und in einer definierten Transportrichtung (14) getaktet transportierbar sind, und mindestens eine an der Transporteinrichtung (12) angeordnete Wiegestation (18; 101) nach Anspruch 13, wobei ein jeweiliger Behälter (13) in der Transportrichtung (14) in den Zwischenraum (39) einer Behälterfixiereinrichtung (25; 60; 62) bewegbar ist und die Wiegestation (18; 101) und der Behälter (13) relativ zueinander in der Betätigungsrichtung (41) zum Überführen des mindestens einen beweglichen Fixierelementes (28) von der Freigabestellung in die Fixierstellung überführbar sind.

15. Vorrichtung nach Anspruch 14, **dadurch gekennzeichnet, dass** zumindest eines der Folgenden gilt:
- das mindestens eine den Behälter (13) greifende Greifelement (23) ist in eine den Behälter (13) freigebende Öffnungsstellung überführbar, wenn der Behälter (13) an der Behälterfixiereinrichtung (25; 60; 62) fixiert ist;
- die Wiegestation (18; 101) umfasst, entlang der Transportrichtung (14), eine Mehrzahl von Wiegezellen (24) und eine Mehrzahl von Behälterfixiereinrichtungen (25; 60; 62), wobei eine vorzugsweise korrespondierende Mehrzahl von Behältern (13) den Behälterfixiereinrichtungen (25; 60; 62) getaktet zugeführt und an der Wiegestation (18; 101) gleichzeitig gewogen wird.

## Claims

1. Container fixing device for pharmaceutical containers (13) for use on a weighing station (18; 101), comprising
- a main body (26) in connection with or as a component of a weighing cell (24) of the weighing station (18; 101),
- two or more fixing elements (27, 28), which are fixed on the main body (26), having at least one respective fixing member (36), which is adapted to be placed onto the container (13), between which a interspace (39) for receiving a container (13) is formed, and of which at least one fixing element (27, 28) is movably arranged on the main body (26),
wherein a container (13) arranged in the interspace (39) comes into contact with an actuating member (45) of the at least one movable fixing element (28) in the case of a relative movement with respect to the main body (26) in an actuation direction (41), and said fixing element is transferable from a release position, in which the container (13) is insertable into the interspace (39) and is removable therefrom, into a fixing position in which the container (13) is fixed by means of the fixing members (36), wherein the container fixing device (25; 60; 62) is designed such that the container (13) is insertable into the interspace (39) in a transport direction (14) which is oriented transversely and in particular perpendicularly to the actuation direction (41).

2. Container fixing device in accordance with claim 1, **characterized in that** at least one of the following applies:
- the container fixing device (25; 60; 62) comprises only one movable fixing element (28);
- the container fixing device (25; 60; 62) comprises at least one immovable fixing element (27);
- the container fixing device (25; 60; 62) comprises a movable fixing element (28) and an immovable fixing element (27), or the container fixing device (25; 60; 62) comprises two movable fixing elements (28).

3. Container fixing device in accordance with one of the preceding claims,
**characterized in that** at least one of the following applies:
- the container (13) is movable out of the interspace (39) in the transport direction (14), in particular the container (13) can pass through the container fixing device (25; 60; 62) in the transport direction (14);
- on the main body (26), at least one through-opening (33) is formed, through which the container (13) is introducible into the interspace (39) in the transport direction (14), in particular, on the main body (26), two through-openings (33) are formed, through which the container (13) is introducible into and removable from the interspace (39).

4. Container fixing device in accordance with one of the preceding claims,
**characterized in that** the main body (26) comprises two or more holding portions (31) which are each arranged at a distance from one another and on which a fixing element (27, 28) is arranged in each case.

5. Container fixing device in accordance with claim 4, **characterized in that** the main body (26) comprises a, for example, plate-shaped or disc-shaped base portion (29), from which the holding portions (31) protrude, and/or on which a connecting element (30) is arranged for connecting to a weighing cell (24).

6. Container fixing device in accordance with one of the preceding claims, **characterized in that** the at least one movable fixing element (28) is mounted on the main body (26) so as to be pivotable about a pivot axis (42), wherein the transport direction (14) preferably is oriented in parallel with the pivot axis (42).

7. Container fixing device in accordance with claim 6, **characterized in that** the at least one movable fixing element (28) forms a two-armed lever which comprises a first lever arm (43) comprising the fixing member (36) and a second lever arm (44) comprising the actuating member (45).

8. Container fixing device in accordance with one of the preceding claims,
**characterized in that** at least one of the following applies:
- the container (13) rests on the actuating member (45) in the fixing position of the at least one movable fixing element (28);
- the main body (26) comprises a recess (35) in which the container (13) engages, preferably in a positive-locking manner, in the state fixed by means of the container fixing device (25; 60; 62);
- the fixing member (36) of at least one fixing element (27, 28) comprises a concave recess (51), preferably matched to the shape and/or the size of the container (13), in which the container (13) engages in the fixing position of the at least one movable fixing element (28).

9. Container fixing device in accordance with one of the preceding claims,
**characterized in that** the fixing member (36) of at least one fixing element (28) is, by means of a preloading element (52), preloaded in the direction of the container (13) arranged in the interspace (39).

10. Container fixing device in accordance with claim 9, **characterized in that** a receptacle (49) for the fixing member (36) is formed on the fixing element (28), or **in that** the fixing element (28) comprises a receptacle (49) in which the fixing member (36) and the preloading element (52) are arranged and which forms a guide for the fixing member (36), wherein the fixing member (36) engages through an opening (50) of the receptacle (49) and projects in the direction of the container (13).

11. Container fixing device in accordance with claim 10, **characterized in that** the fixing element (28) has a receptacle body (63) which comprises or forms the receptacle (49) and is displaceably guided on a holding portion (31) of the main body (26) and is coupled to a pivot portion (65), which is pivotably mounted on the holding portion (31), of the fixing element (28) and, in the case of pivoting of the pivot portion (65), is displaced thereby relative to the main body (26), wherein a displacement direction (68) of the receptacle body (63) is oriented in particular perpendicularly to the actuation direction (41).

12. Container fixing device in accordance with one of the preceding claims, **characterized in that** at least one of the following applies:
- the at least one movable fixing element (28) is automatically transferred from the fixing position into the release position during a relative movement of the container (13) and the main body (26) counter to the actuation direction (41);
- the container fixing device (25; 60; 62) comprises interacting coupling elements (53) at two or more fixing elements (27, 28) in each case, in order to couple the fixing elements (27, 28) to one another in the release position, in particular, in a contactless manner, wherein the fixing elements (27, 28) are transferred from the release position into the fixing position counter to the action of the coupling elements (53).

13. Weighing station for an apparatus (10; 100) for processing pharmaceutical containers (13), comprising at least one weighing cell (24) and at least one container fixing device (25; 60; 62), associated therewith, in accordance with one of the preceding claims, preferably a plurality of weighing cells (24) and a plurality of container fixing devices (25; 60; 62) in accordance with one of the preceding claims, wherein each weighing cell (24) is associated with a container fixing device (25; 60; 62).

14. Apparatus for processing pharmaceutical containers (13), comprising a transport device (12), wherein the containers (13) are each held on the transport device (12) with at least one gripping element (23) and are transportable in a cycled manner in a defined transport direction (14), and at least one weighing station (18; 101) in accordance with claim 13 arranged on the transport device (12), wherein a respective container (13) is movable in the transport direction (14) into the interspace (39) of a container fixing device (25; 60; 62), and the weighing station (18; 101) and the container (13) are transferable relative to one another in the actuation direction (41) for transferring the at least one movable fixing element (28) from the release position into the fixing position.

15. Apparatus in accordance with claim 14, **characterized in that** at least one of the following applies:
- the at least one gripping element (23) gripping the container (13) is transferable into an open position releasing the container (13) when the container (13) is fixed to the container fixing device (25; 60; 62);
- the weighing station (18; 101) comprises a plurality of weighing cells (24) and a plurality of container fixing devices (25; 60; 62) along the transport direction (14), wherein a preferably corresponding plurality of containers (13) are supplied in a cycled manner to the container fixing devices (25; 60; 62) and are weighed at the same time at the weighing station (18; 101).

## Revendications

1. Dispositif de fixation de récipients pour des récipients pharmaceutiques (13) à utiliser sur un poste de pesée (18 ; 101), comprenant
- un corps de base (26) en liaison avec ou faisant partie intégrante d'une cellule de pesée (24) du poste de pesée (18 ; 101),
- deux ou plusieurs éléments de fixation (27, 28) fixés au corps de base (26), avec au moins un organe de fixation (36) respectif pouvant être appliqué contre le récipient (13), entre lesquels est formé un espace intermédiaire (39) pour recevoir un récipient (13) et dont au moins un élément de fixation (27, 28) est agencé de manière mobile sur le corps de base (26),
un récipient (13) agencé dans l'espace intermédiaire (39) entrant en contact, lors d'un mouvement relatif par rapport au corps de base (26) dans une direction d'actionnement (41), avec un organe d'actionnement (45) de l'au moins un élément de fixation mobile (28) et celui-ci pouvant être transféré d'une position de libération, dans laquelle le récipient (13) peut être introduit dans l'espace intermédiaire (39) et retiré de celui-ci, vers une position de fixation, dans laquelle le récipient (13) est fixé au moyen des organes de fixation (36),
le dispositif de fixation de récipients (25 ; 60 ; 62) étant conçu de telle sorte que le récipient (13) peut être introduit dans l'espace intermédiaire (39) dans une direction de transport (14) qui est orientée transversalement et, en particulier, perpendiculairement à la direction d'actionnement (41).

2. Dispositif de fixation de récipients selon la revendication 1, **caractérisé en ce qu'**au moins l'un des éléments suivants s'applique :
- le dispositif de fixation de récipients (25 ; 60 ; 62) ne comprend qu'un seul élément de fixation mobile (28) ;
- le dispositif de fixation de récipients (25 ; 60 ; 62) comprend au moins un élément de fixation immobile (27) ;
- le dispositif de fixation de récipients (25 ; 60 ; 62) comprend un élément de fixation mobile (28) et un élément de fixation immobile (27) ou le dispositif de fixation de récipients (25 ; 60 ; 62) comprend deux éléments de fixation mobiles (28).

3. Dispositif de fixation de récipients selon l'une quelconque des revendications précédentes, **caractérisé en ce qu'**au moins l'un des éléments suivants s'applique :
- le récipient (13) peut être sorti de l'espace intermédiaire (39) dans la direction de transport (14), en particulier le récipient (13) peut être passé à travers le dispositif de fixation de récipients (25 ; 60 ; 62) dans la direction de transport (14) ;
- au moins une ouverture de passage (33) est formée sur le corps de base (26), à travers laquelle le récipient (13) peut être introduit dans l'espace intermédiaire (39) dans la direction de transport (14), en particulier deux ouvertures de passage (33) sont formées sur le corps de base (26), à travers lesquelles le récipient (13) peut être introduit dans l'espace intermédiaire (39) et en être extrait.

4. Dispositif de fixation de récipients selon l'une des revendications précédentes, **caractérisé en ce que** le corps de base (26) comprend deux ou plusieurs sections de retenue (31) qui sont disposées chacune à distance les unes des autres et sur lesquelles est agencé, respectivement, un élément de fixation (27, 28).

5. Dispositif de fixation de récipients selon la revendication 4, **caractérisé en ce que** le corps de base (26) comprend une section de base (29), par exemple en forme de plaque ou de plateau, de laquelle font saillie les sections de retenue (31), et/ou sur laquelle est agencé un élément de liaison (30) pour la liaison avec une cellule de pesée (24).

6. Dispositif de fixation de récipients selon l'une des revendications précédentes, **caractérisé en ce que** l'au moins un élément de fixation mobile (28) est monté sur le corps de base (26) de manière à pouvoir pivoter autour d'un axe de pivotement (42), la direction de transport (14) étant de préférence orientée parallèlement à l'axe de pivotement (42).

7. Dispositif de fixation de récipients selon la revendication 6, **caractérisé en ce que** l'au moins un élément de fixation mobile (28) forme un levier à deux bras qui comprend un premier bras de levier (43) comprenant l'organe de fixation (36) et un deuxième bras de levier (44) comprenant l'organe d'actionnement (45).

8. Dispositif de fixation de récipients selon l'une quelconque des revendications précédentes, **caractérisé en ce qu'**au moins l'un des éléments suivants s'applique :
- le récipient (13) est en contact avec l'organe d'actionnement (45) dans la position de fixation d'au moins un élément de fixation mobile (28) ;
- le corps de base (26) comprend un évidement (35) dans lequel le récipient (13) s'engage, de préférence par complémentarité de forme, dans l'état fixé au moyen du dispositif de fixation du récipient (25 ; 60 ; 62) ;
- l'organe de fixation (36) d'au moins un élément de fixation (27, 28) comprend un évidement concave (51), de préférence adapté à la forme et/ou à la taille du récipient (13), dans lequel le récipient (13) s'engage lorsque l'au moins un élément de fixation mobile (28) est en position de fixation.

9. Dispositif de fixation de récipients selon l'une des revendications précédentes, **caractérisé en ce que** l'organe de fixation (36) d'au moins un élément de fixation (28) est précontraint au moyen d'un élément de précontrainte (52) en direction du récipient (13) agencé dans l'espace intermédiaire (39).

10. Dispositif de fixation de récipients selon la revendication 9, **caractérisé en ce qu'**un logement (49) pour l'organe de fixation (36) est formé sur l'élément de fixation (28), ou **en ce que** l'élément de fixation (28) comprend un logement (49) dans lequel sont agencés l'organe de fixation (36) et l'élément de précontrainte (52) et qui forme un guidage pour l'organe de fixation (36), l'organe de fixation (36) traversant une ouverture (50) du logement (49) et faisant saillie en direction du récipient (13).

11. Dispositif de fixation de récipients selon la revendication 10, **caractérisé en ce que** l'élément de fixation (28) présente un corps de réception (63) qui comprend ou forme le logement (49), et qui est guidé de manière coulissante sur une section de retenue (31) du corps de base (26) et est couplé à une section pivotante (65) de l'élément de fixation (28) montée de manière pivotante sur la section de retenue (31) et qui est déplacé lors du pivotement de la section pivotante (65) de celle-ci par rapport au corps de base (26), une direction de déplacement (68) du corps de réception (63) étant orientée en particulier perpendiculairement à la direction d'actionnement (41).

12. Dispositif de fixation de récipients selon l'une quelconque des revendications précédentes, **caractérisé en ce qu'**au moins l'un des éléments suivants s'applique :
- l'au moins un élément de fixation mobile (28) passe automatiquement de la position de fixation à la position de libération lors d'un mouvement relatif du récipient (13) et du corps de base (26) dans le sens opposé à la direction d'actionnement (41) ;
- le dispositif de fixation de récipients (25 ; 60 ; 62) comprend, sur deux ou plusieurs éléments de fixation (27, 28), des éléments de couplage (53) coopérant respectivement pour coupler les éléments de fixation (27, 28) entre eux, en particulier sans contact, dans la position de libération, les éléments de fixation (27, 28) étant alors transférés de la position de libération à la position de fixation contre l'action des éléments de couplage (53).

13. Poste de pesée pour un dispositif (10 ; 100) de traitement de récipients pharmaceutiques (13), comprenant au moins une cellule de pesée (24) et au moins un dispositif de fixation de récipients (25 ; 60 ; 62) associé à celle-ci selon l'une des revendications précédentes, de préférence une pluralité de cellules de pesée (24) et une pluralité de dispositifs de fixation de récipients (25 ; 60 ; 62) selon l'une des revendications précédentes, un dispositif de fixation de récipients (25 ; 60 ; 62) étant associé à chaque cellule de pesée (24).

14. Dispositif pour le traitement de récipients pharmaceutiques (13), comprenant un dispositif de transport (12), les récipients (13) étant maintenus sur le dispositif de transport (12) avec respectivement au moins un élément de préhension (23) et pouvant être transportés de manière cadencée dans une direction de transport définie (14), et au moins un poste de pesée (18, 101) agencé sur le dispositif de transport (12) selon la revendication 13, un récipient respectif (13) pouvant être déplacé dans la direction de transport (14) dans l'espace intermédiaire (39) d'un dispositif de fixation de récipients (25 ; 60 ; 62) et le poste de pesée (18 ; 101) et le récipient (13) pouvant être transférés l'un par rapport à l'autre dans la direction d'actionnement (41) pour transférer l'au moins un élément de fixation mobile (28) de la position de libération à la position de fixation.

15. Dispositif selon la revendication 14, **caractérisé en ce qu'**au moins l'un des éléments suivants s'applique :
- l'au moins un élément de préhension (23) saisissant le récipient (13) peut être transféré vers une position d'ouverture libérant le récipient (13) lorsque le récipient (13) est fixé sur le dispositif de fixation de récipients (25 ; 60 ; 62) ;
- le poste de pesée (18 ; 101) comprend, le long de la direction de transport (14), une pluralité de cellules de pesée (24) et une pluralité de dispositifs de fixation du récipient (25 ; 60 ; 62), une pluralité de récipients (13), d'un nombre de préférence correspondant, étant amenés de manière cadencée aux dispositifs de fixation du récipients (25 ; 60 ; 62) et pesés simultanément au poste de pesée (18 ; 101).
